# EUROPÄISCHE PATENTANMELDUNG

(11) **EP 2 415 796 A1**
(43) Veröffentlichungstag der Anmeldung: **08.02.2012**
(21) Anmeldenummer: 11172789.7
(22) Anmeldetag: 06.07.2011
(51) Int. Cl.: C08G 65/00

(54) **Modifizierte Alkoxylierungsprodukte mit mindestens einer nicht-terminalen Alkoxysilylgruppe und deren Verwendung in härtbaren Massen mit erhöhter Lagerstabilität und Dehnbarkeit**

(30) Priorität: 02.08.2010 DE 102010038768
(71) Anmelder: Evonik Goldschmidt GmbH, 45127 Essen (DE)
(72) Erfinder: Brugger, Bastian Matthias, Dr., 46049 Oberhausen (DE); Boinowitz, Tammo, Dr., 45133 Essen (DE); Schubert, Frank, Dr., 47506 Neukirchen-Vluyn (DE); Roessing, Melanie, 46119 Oberhausen (DE); Lobert, Matthias, Dr., 45309 Essen (DE)

(57) **Zusammenfassung**

Modifizierte Alkoxylierungsprodukte der Formel (I), deren Verwendung und Verfahren zu deren Herstellung.

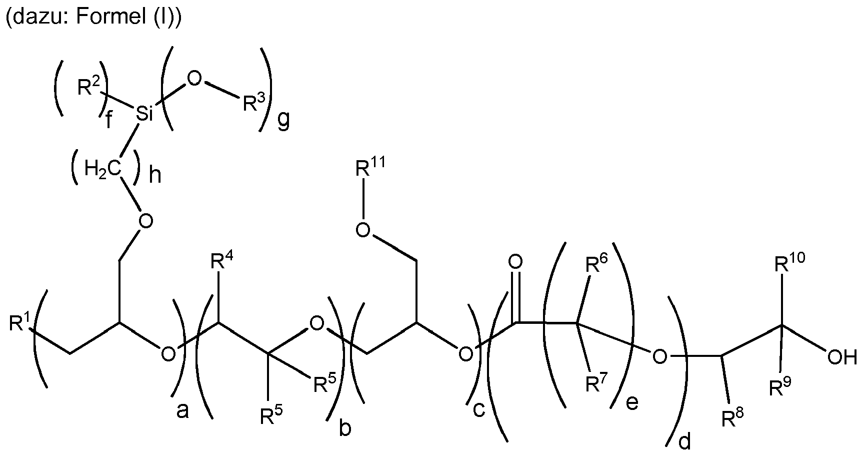

## Beschreibung

Alkoxyierungsprodukte wie beispielsweise Polyether, die Alkoxysilylgruppen tragen, wobei zumindest eine Alkoxysilylgruppe nicht-terminal in der Kette des Polyethers blockartig oder statistisch verteilt vorliegt und wobei die Polyetherkette über zumindest eine terminale OH-Gruppe verfügt, sollen in einer Dichtstoff- oder Klebstoffformulierung eine ausreichende Lagerstabilität erhalten.

Die Erfindung betrifft neue Alkoxysilylgruppen tragende Alkoxylierungsprodukte, zumeist in Form von (Poly)etheralkoholen oder Polyetherblöcke enthaltenden Copolymeren, die dadurch gekennzeichnet sind, dass die Reaktivität der Hydroxylfunktion reduziert ist, sowie Verfahren zu deren Herstellung und deren Verwendung.

Konventionelle Polyetheralkohole, oft auch kurz einfach als Polyether bezeichnet und vorwiegend aus Propylenoxid und Ethylenoxid aufgebaut, sind seit langem bekannt und werden in großen Mengen technisch hergestellt. Sie dienen unter anderem durch Umsetzung mit Polyisocyanaten als Ausgangsverbindungen zur Herstellung von Polyurethanen oder aber auch zur Herstellung von Tensiden. Organische Alkoxysilanverbindungen wie 3-Glycidyloxy-propyltrimethoxy- bzw. - triethoxysilan, die z.B. unter den Handelsnamen DYNASYLAN^{®} GLYMO bzw. DYNASYLAN^{®} GLYEO (Warenzeichen der Evonik Degussa GmbH) erhältlich sind, nehmen Eingang in die Herstellung von organisch modifizierten Netzwerken beim Sol-Gel-Verfahren, das als Schlüsselprozess zur Herstellung von Nanocompositen dient, die Beschichtungssysteme mit verbesserten Eigenschaften im Hinblick auf Härte, Kratz- und Abriebfestigkeit, Temperaturresistenz sowie Lösemittel- und Säurebeständigkeit liefern. Alkoxysilanverbindungen finden des Weiteren vielfältigen Eingang in Dicht- und Klebstoffe sowie generell als reaktive Haftvermittler und Primer für verschiedene Substrate wie Metalle, Glas und Glasfasern/Glasgewebe für faserverstärkte Verbundwerkstoffe und zur Oberflächenbehandlung von z.B. Pigmenten und Füllstoffen in Lacken.

Es hat nicht an Anstrengungen gefehlt, die Eigenschaftsprofile von Alkoxysilanverbindungen durch chemische Modifizierungen zu verbessern, um noch weitere Anwendungsgebiete für diese bedeutsame Produktklasse zu erschließen. So ist aus der Literatur bekannt, das Eigenschaftsprofil von Alkoxylierungsprodukten (Polyethern) mit denen von vernetzbaren, speziell Alkoxysilylgruppen tragenden Verbindungen zu kombinieren. So zielt die EP 0 918 062 u.a. auf die Modifizierung von Polyetheralkoholen mit z.B. Isocyanatgruppen tragenden Alkoxysilanen unter urethanisierender Verknüpfung ab. Des Weiteren wird zur Alkoxysilyl-Modifizierung auch die hydrosilylierende Anbindung von Alkoxymonohydridosilanen an zuvor mit olefinisch ungesättigten Endgruppen modifizierten Polyetherolen gewählt.

Die Schriften JP 09012863, JP 09012861 und JP 07062222 beanspruchen ein Verfahren zur Herstellung von ausschließlich terminal mit hydrolysierbaren Trialkoxysilylfunktionen ausgerüsteten Polyetherolen, z.B. Glycerinpolyetherolen, die zunächst via DMC-Katalyse hergestellt, dann durch Zugabe von Alkalialkoholat und Allylchlorid in die entsprechenden Allylether und anschließend durch Platinmetall katalysierte Hydrosilylierung zu den Alkoxysilyl-terminierten Zielprodukten umgesetzt werden.

Alle im Stand der Technik beschriebenen Verfahren eignen sich somit nur zur Herstellung von ausschließlich terminal mit Trialkoxysilylgruppen modifizierten Polyoxyalkylenverbindungen und keinesfalls zur einfachen und/oder mehrfachen Modifizierung von Polyetherketten mit Trialkoxyfunktionen auch innerhalb der Sequenz von Oxyalkyleneinheiten.

Nach der EP 2 093 244 konnten erstmals Alkoxysilylgruppen-tragende Alkoxylierungsprodukte hergestellt werden, die dadurch ausgezeichnet sind, dass im Gegensatz zum bis dahin bekannten Stand der Technik die Alkoxysilylgruppen entlang der Polyetherkette blockartig oder statistisch verteilt sind und nicht nur an den Termini der Kette lokalisiert sind. Weiterhin zeichnen sich diese Verbindungen durch eine reaktionsbedingt endständige OH-Gruppe aus.

Aus dem Vorhandensein der OH-Gruppe und den hydrolyseempfindlichen Alkoxysilylgruppen in einem Molekül rührt die intrinsische Reaktivität der Verbindungen und leichte Vernetzbarkeit unter Bildung dreidimensionaler polymerer Netzwerke her. Allerdings haben Versuche auch gezeigt, dass die Reaktivität der OH-Gruppe gegebenenfalls zu hoch liegt.

Die daraus hergestellten Formulierungen weisen eine ungenügende Lagerstabilität auf. Sie vernetzen bereits bei leicht erhöhter Temperatur (bis 60°C) innerhalb weniger Tage bei Anwesenheit der typischerweise in feuchtigkeitshärtenden Formulierungen verwendeten Metall- und/oder Aminkatalysatoren.

Auch wenn Restfeuchte in der Formulierung die Vernetzung zu begünstigen scheint, konnte gezeigt werden, dass auch unter sehr trockenen Bedingungen ein Anvernetzen der Formulierung innerhalb weniger Tage im Schnelllagertest abläuft.

Aufgabe der vorliegenden Erfindung ist daher die Absenkung der Reaktivität der OH-Gruppe von hydroxylgruppenterminierten Alkoxylierungsprodukten die nicht ausschließlich terminale Alkoxysilylgruppen tragen.

Überraschenderweise konnte gezeigt werden, dass sich durch die Reduzierung der Reaktivität der OH-Gruppen die Lagerstabilität und überraschenderweise auch die Bruchdehnung des gehärteten/polymerisierten alkoxysilylierten Alkoxylierungsprodukts massiv verbessern lässt.

Gelöst wird die Aufgabe durch die Einführung einer raumerfüllenden hydroxyl funktionalisierten Gruppe am Kettenende des Präpolymers. Diese so modifizierten Strukturen können alleine oder in Abmischung mit nicht modifizierten Strukturen vorliegen oder zusammen mit weiteren, andersartigen härtbaren Verbindungen verwendet werden.

Gegenstand der Erfindung sind daher Alkoxylierungsprodukte der allgemeinen Formel (I) 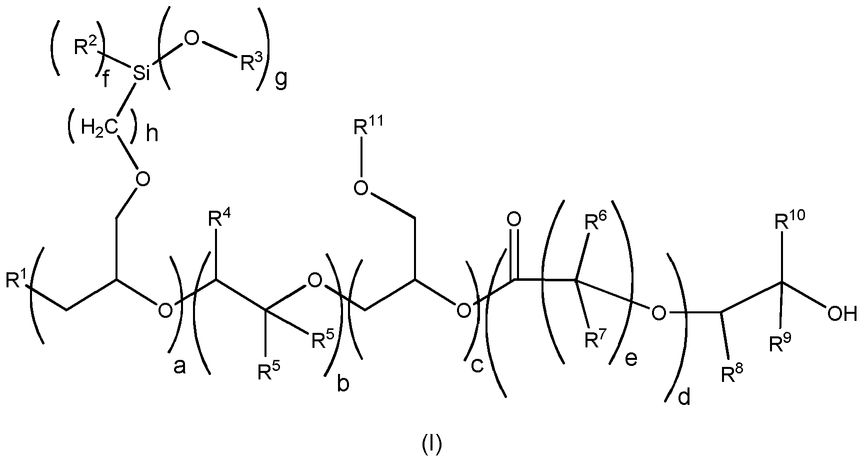 wobei
R¹ = einem 1- bis 6-fach funktionellen gesättigten oder ungesättigten, linearen oder verzweigten organischen Rest vom Typ einer Alkoxy-, Arylalkoxy- oder Alkylarylalkoxygruppe, in denen die Kohlenstoffkette durch Sauerstoffatome unterbrochen sein kann und auch seitenständige Alkoxysilylgruppen enthaltende Substituenten tragen kann oder direkt mit Alkoxysilylgruppen substituiert ist, einem Polyoxyalkylenrest, einem Polyetherrest, einen Polyetheralkoxyrest oder einer einfach oder mehrfach annelierten phenolischen Gruppe entspricht oder von einer einfach oder mehrfach hydroxylierten oder mehrfach substituierten Verbindung ausgewählt aus der Gruppe der Alkohole, Polyetherole, Polyesterole, Siloxane, perfluorierten Polyetherole, (poly)-Urethane oder Zucker abgeleitet sein kann, bevorzugt sind Polyole, EO-Polyetherole, PO-Polyetherole oder EO/PO-Polyetherole, Polyesterole, Glycerin, Polyglycerin, PolyTHF, Phenol, Alkyl- und Arylphenole, Bisphenol A, Novolake, Hydroxycarbonsäuren, Siloxanole, Siloxandiole, Alkoxysilylgruppen modifizierte Polyetherole, Castor Öl, Rizinusöl, Ricinolsäure, Zucker, Lactone, Cellulose, Methanol, Ethanol, n-, i-Propanol, n-, i-, oder t-Butanol, 2-Butanol, Octanol, Allylalkohol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, OH-funktionelle Polyolefine wie OH-funktionelles Polybutadien, 1,4-Butandiol, 1,6-Hexandiol, 1,4-Butindiol, Tetramethyldecindiol, Trimethylolpropan, Pentaerythrit, Sorbit, Cellulosezucker, Lignin oder auch weitere auf Naturstoffen basierende, Hydroxylgruppen tragende Verbindungen, oder sonstiger Hydroxylverbindungen die auch selbst Alkoxysilylgruppen tragen können oder Substituenten tragen, die mit Alkoxysilylgruppen substituiert sind,
R² = eine Alkylgruppe mit 1 bis 8 Kohlenstoffatomen, insbesondere Methyl- oder Ethyl,
R³ = eine Alkylgruppe mit 1 bis 8 Kohlenstoffatomen, insbesondere Methyl-, Ethyl-, Propyl, i-Propyl-,
R⁴ = ein Wasserstoffradikal oder eine Alkylgruppe mit 1 bis 8 Kohlenstoffatomen, bevorzugt Methyl- oder Ethyl,
R⁵ = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl, Ethyl, Octyl, Decyl, Dodecyl, Phenyl, Benzyl, besonders bevorzugt Wasserstoff, Methyl oder Ethyl,
R¹¹ = eine gesättigte oder ungesättigte Alkylgruppe mit 1 bis 8 Kohlenstoffatomen ist, deren Kette durch Sauerstoff unterbrochen sein kann und weiter funktionelle Gruppen tragen kann wie Carboxylgruppen oder Estergruppen, eine Arylgruppe mit 6 bis 20 Kohlenstoffatomen, eine Alkarylgruppe mit 7 bis 20 Kohlenstoffatomen, bevorzugt eine Methyl-, Ethyl- Phenyl oder Benzylgruppe oder eine Allylgruppe oder ein Polyacrylsäureester
R⁶ und R⁷ = unabhängig voneinander gleich R⁵,
R⁸ und R⁹ = unabhängig voneinander gleich R⁴,
R¹⁰ = R⁴ mit der Maßgabe,
dass gilt, wenn R⁹ = H, dann gilt R¹⁰ gleich einer Alkylgruppe mit 2 bis 8 Kohlenstoffatomen und falls R⁹ = Methyl, dann gilt R¹⁰ ist eine Alkylgruppe mit 1 bis 8 Kohlenstoffatomen, jedenfalls ungleich Wasserstoff;
a = 0 bis 1000, bevorzugt 0 bis 50 und besonders bevorzugt 0 bis 10 ist, mit der Maßgabe, dass a größer oder gleich 1 sein muss, wenn R¹ keine Substituenten mit Alkoxysilylgruppen trägt oder selbst nicht direkt mit Alkoxysilylgruppen substituiert ist,
b = 0 bis 1000, bevorzugt 1 bis 800, besonders bevorzugt 30 bis 500 und insbesondere 80 bis 300 ist,
c = unabhängig voneinander gleich b,
d = unabhängig voneinander gleich b,
mit der Maßgabe, dass die Gruppen mit den Indices a, b, c und d frei permutierbar über die Molekülkette sind und einfach oder mehrfach vorhanden sein können und blockartig hintereinander oder statistisch über die Molekülkette verteilt auftreten können
e = 1 bis 10, bevorzugt 1 bis 5,
g + f = 3 und g mindestens gleich 1 ist,
h = 0, 1, 2, 3, 4, 5, 6, 7, 8, 9 oder 10.

Bevorzugt trägt das Alkoxylierungsprodukt der Formel (I) einen Endblock von alkoxyliertem Butylenoxid -(C₄H₉O)ₙH mit n = 1 bis 100, bevorzugt 2 bis 50 und insbesondere 5 bis 20.

Die mittleren Molmassen M_{w} der so hergestellten Verbindungen der Formel (I) liegen zwischen 8.000 bis 40.000 g/mol, bevorzugt zwischen 10.000 und 20.000 g/mol. Vorzugsweise sind die Verbindungen der Formel (I) bei Raumtemperatur flüssig.

Die Produkte der Formel (I) können alleine oder auch zusammen mit Alkoxylierungsprodukten, die die erfindungsgemäße Endgruppenfunktionalisierung nicht aufweisen, verwendet werden. Werden Mischungen eingesetzt, so beträgt in Zusammensetzungen enthaltend beide Spezies das massenprozentuale Verhältnis zwischen den endgruppenmodifizierten Verbindungen der Formel (I) und ihren unmodifizierten Vorläufern zwischen 100:0 und 10:90, bevorzugt zwischen 95:5 und 15:85 und insbesondere zwischen 80:20 und 30:70.

Die verschiedenen Monomereinheiten sowohl der Fragmente mit den Indices a, b, c, und d als auch der eventuell vorhandenen Polyoxyalkylenkette des Substituenten R¹ können untereinander blockweise aufgebaut sein oder aber auch einer statistischen Verteilung unterliegen und zudem untereinander frei permutiert werden. Die Abfolge der Monomereinheiten im entstehenden Molekül hängt allein von der Dosierungsreihenfolge und der Reaktivität der zugrundeliegenden Moleküle ab.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (I).

Ein weiterer Gegenstand der Erfindung sind härtbare Zusammensetzungen in Form von Formulierungen als Bestandteile von unter Wasser- oder Feuchtigkeitseinwirkung härtbaren Massen, die mindestens eines der erfindungsgemäßen Produkte allein oder in Mischungen mit weiteren, gegebenenfalls gleichen härtbaren Substanzen enthalten.

Die Formulierungen können in Form einer Lösung, Emulsion, Dispersion oder auch Suspension vorliegen. Dabei können sich in beispielsweise wässrigen Emulsionen oder Suspensionen auch Teilhydrolysate und damit anvernetzte, teilpolymerisierte Species abgeleitet von den Verbindungen der Formel (I) befinden. Diese Teilhydrolysate in Suspension oder Emulsion eignen sich insbesondere zur Hydrophobierung von flächigen Substraten, beispielsweise im Bautenschutz.

Dabei lassen sich auch die in der EP 2 093 244 beschriebenen Produkte in beliebigen Mischungen mit den hier vorgestellten Strukturen einsetzen, wobei die hier erfindungsgemäßen Strukturen an solchen Mischungen vorteilhaft zumindest einen Anteil von mindestens 20 Gew.-%, bevorzugt mindestens 50 Gew.-% haben. Die so erhältlichen Formulierungen können zudem Verdünner, Katalysatoren, Weichmacher, Füllstoffe, Lösungsmittel, Haftvermittler, Additive zur Anpassung des Fließverhaltens, sogenannte Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner Komplexbildner, Netzmittel, co-Vernetzer, Sprühhilfsmittel, Vitamine, Wuchsstoffe, Hormone, pharmakologische Wirkstoffe, Duftstoffe, Radikalfänger und/oder andere Zuschlagstoffe enthalten.

In der EP 2 093 244 wird beschrieben, dass man Epoxidfunktionen tragende Alkoxysilane in vorteilhafter Weise in Gegenwart bekannter Doppelmetallcyanidkatalysatoren selektiv alkoxylieren kann. Mit dem dort beanspruchten Verfahren erschließt sich die Möglichkeit, in reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Die Offenbarung der Absätze [0007] bis [00043] der EP 2 093 244 ist daher vollumfänglich als Teil und Bestandteil dieser Beschreibung anzusehen.

Nachteilig an dort beschriebenen alkoxysilylierten Produkten ist allerdings ihre geringe Lagerstabilität bei Einsatz in härtbaren Massen.

Die hier mit der Formel (I) beschriebenen Strukturen lösen das Problem der mangelnden Lagerstabilität.

Bevorzugt sind die erfindungsgemäßen Produkte über ein Alkoxylierungsverfahren unter Verwendung von Doppelmetallcyanidkatalysatoren (DMC-Katalysatoren) erhältlich. Diese Katalysatoren sind in ihrer Herstellung und Verwendung als Alkoxylierungskatalysatoren seit den 1960er Jahren bekannt und werden zum Beispiel in US 3,427,256, US 3,427,334, US 3,427,335, US 3,278,457, US 3,278,458 oder US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Als Referenz sei weiterhin z. B. auf EP-A1-1 017 738, US 5,777,177, EP-A1-0 981 407, WO 2006/002807 und EP-A1-1 474 464 verwiesen.

Ein weiterer Gegenstand der Erfindung ist daher ein Verfahren zur Herstellung von Alkoxysilylgruppen tragenden Alkoxylierungsprodukten der Formel (I) unter DMC-Katalyse aus Hydroxylgruppen tragenden Startverbindungen R¹-H, bei dem in einer Alkoxylierungsreaktion zunächst wahlweise Alkylenoxide, epoxyfunktionelle Alkoxysilane, Glycidylverbindungen und/oder Lactone in beliebiger Abfolge angelagert werden und in einem letzten Alkoxylierungschritt mindestens eine Monomereinheit eines Epoxids der Formel (la) 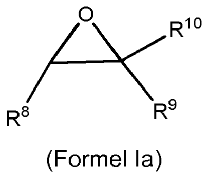 wobei
R⁸ und R⁹ = ein Wasserstoffradikal oder eine Alkylgruppe mit 1 bis 8 Kohlenstoffatomen, bevorzugt Methyl- oder Ethyl,
R¹⁰ = ein Wasserstoffradikal oder eine Alkylgruppe mit 1 bis 8 Kohlenstoffatomen, bevorzugt Methyl- oder Ethyl,
mit der Maßgabe,
dass gilt, wenn R⁹ = H, dann gilt R¹⁰ gleich einer Alkylgruppe mit 2 bis 8 Kohlenstoffatomen und falls R⁹ = Methyl, dann gilt R¹⁰ ist eine Alkylgruppe mit 1 bis 8 Kohlenstoffatomen, jedenfalls ungleich Wasserstoff,
an die OH-Funktion der Polymerkette addiert wird.

Bevorzugt wird zumindest ein substituiertes Epoxid allein oder in beliebigen Mischungen mit anderen gleichermaßen aufgebauten Epoxiden eingesetzt, dass eine lineare oder verzweigte Alkylgruppen mit 2 bis 30 Kohlenstoffatomen als Substituent R⁸, R⁹ oder R¹⁰ aufweist.

Besonders bevorzugt wird Butylenoxid oder Isobutylenoxid im letzten Akoxylierungsschritt eingesetzt.

Der entstehende längerkettige, bevorzugt aus einpolymerisiertem Butylenoxid bestehende Endblock des so hergestellten Präpolymers trägt wahrscheinlich zu einer sterischen Abschirmung der endständigen OH-Funktion dieser Moleküle bei.

Je nach verwendetem epoxidfunktionellem Alkoxysilan und evtl. eingesetzten weiteren Monomeren, können modifizierte Alkoxylierungsprodukte (I) hergestellt werden, sowie beliebig aufgebaute Gemische.

Eine nicht abschließende Sammlung von Epoxidgruppen-substituierten Alkoxysilanen, die allein oder in Mischungen miteinander oder in Kombination mit Epoxidverbindungen im Rahmen der Erfindung verwendet werden können, umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan. Unter den Verbindungen die den Rest R¹ der Formel (I) liefern, werden im Rahmen der vorliegenden Erfindung Substanzen verstanden, die den Anfang (Start) des herzustellenden Alkoxylierungsprodukts bilden, das durch die erfindungsgemäße Anlagerung von epoxidfunktionellen Monomeren der und evtl. weiteren Comonomeren erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt.

Als OH-funktionelle Startverbindungen R¹-H werden vorzugsweise Verbindungen mit Molmassen von 31 bis 10.000 g/mol, insbesondere 50 bis 2000 g/mol und mit 1 bis 8, bevorzugt mit 1 bis 4 Hydroxylgruppen eingesetzt. Die Startverbindungen können in beliebigen Mischungen miteinander oder als Reinsubstanz eingesetzt werden. Es können auch seitenständig mit Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden.

Vorteilhaft werden niedermolekulare Polyetherole mit 1-8 Hydroxylgruppen und Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1-20 phenolischen OH-Funktionen. Hierzu gehören beispielsweise Phenol, Alkyl- und Arylphenole, Bisphenol A und Novolake.

Durch das erfindungsgemäße Verfahren werden modifizierte Alkoxylierungsprodukte bereitgestellt, die sich dadurch auszeichnen, dass sie hinsichtlich Strukturaufbau und Molmasse gezielt und reproduzierbar hergestellt werden können, lagerstabil sind und hervorragend unter Feuchtigkeitseinfluss zu einem klebenden und/oder dichtenden Werkstoff verarbeitet werden können, der bevorzugt elastische Eigenschaften aufweist. Die durch die Alkoxylierungsreaktion unter Ringöffnung der Reaktionskomponenten der Starter, einer organischen Hydroxylverbindung, und unterschiedlichen Epoxiden, die in Mischungen eingesetzt werden können und von denen zumindest ein gewisser Anteil Alkoxysilylgruppen trägt, in die entstehende modifizierte Polymerkette eingefügten Fragmente sind in ihrer Sequenz untereinander frei permutierbar.

Mit dem hier erfindungsgemäß eingeführten Verfahren erschließt sich erstmals ein Verfahren zur Herstellung kommerziell verwendbarer, lagerstabiler Kleb- und Dichtstoffe aus Alkoxylierungsprodukten, die Alkoxysilylgruppen nicht ausschließlich terminal tragen und die ggf. auch für Beschichtungen oder zur Oberflächenbehandlung flächiger oder partikulärer Substrate und Objekte genutzt werden können.

So ermöglicht das erfindungsgemäße Verfahren den Aufbau neuartiger, aus dem Stand der Technik so nicht ableitbarer Präpolymersysteme, deren Vernetzung zu Polymerisaten führt, die somit ebenfalls einen neuartigen Aufbau widerspiegeln. Ein einfacher Einschub eines alkoxysilylgruppenfreien Polymerfragments zwischen die erfindungsgemäßen erhaltenen Ketten- und/oder Termini-Funktionalisierungen und einen nicht näher spezifizierten, langläufig bekannten, Polymerrest kann somit in keinem Fall zu den erfindungsgegenständlichen Präpolymeren führen.

Die Reaktion wird bei Temperaturen von 60°C bis 150°C durchgeführt, bevorzugt sind Temperaturen von 75°C bis 150°C, besonders bevorzugt sind Temperaturen von 80°C und 140°C, und ganz besonders bevorzugt ist eine Reaktionstemperatur von zunächst 115°C bis 140°C bis zur Einbringung der Alkoxysilylgruppen tragenden Monomere, und dann eine Temperatur von 80°C bis 110°C nach der Einbringung der Alkoxysilylgruppen tragenden Monomere und für die verbleibende Reaktionszeit.

Die erfindungsgemäßen unter Feuchtigkeitseinfluß härtbaren Zusammensetzungen und Mischungen, enthaltend bevorzugt mindestens eine Komponente der Formel (I) können z. B. als Klebstoff und/oder Dichtstoffe zur Beschichtung und Modifizierung von flächigen, partikulären, faserigen Substratoberflächen oder Geweben eingesetzt werden. Die Beschichtung kann z. B. eine Klebstoffbeschichtung, gegebenenfalls auch eine geschäumte Klebstoffbeschichtung sein. Die härtbare Zusammensetzung kann auch in Form einer Emulsion, Dispersion, Suspension oder Lösung, vorzugsweise als wässrige Emulsion, eingesetzt werden. Diese wässrige Emulsion kann teilweise hydrolysierte, teilvernetzte oligomere oder (teil-)polymere Folgeprodukte der Hydrolyse- oder Härtungsreaktion der Verbindungen der Formel (I) enthalten.

Ein weiterer Gegenstand der Erfindung ist daher die Verwendung der erfindungsgemäßen Produkte der Formel (I) in Zusammensetzungen als Bestandteil von Formulierungen als Kleb- oder Dichtstoff oder zum Zwecke der Beschichtung von Substraten.

Diese neuartigen, erfindungsgemäßen reaktiven modifizierten Alkoxylierungprodukte stellen auf Grund ihrer hydrolyseempfindlichen und zur Vernetzung neigenden Alkoxysilylgruppen härtbare modifizierte Polymere oder Oligomere dar. Die Vernetzung zu festen duroplastischen, oder abhängig von der Wahl der Vernetzungsdichte oder bestimmten Zuschlagstoffen auch elastomeren oder thermoplastischen Endprodukten erfolgt auf einfache Weise in Gegenwart von Wasser und wahlweise unter Zusatz von Säure oder Base als Beschleuniger. Durch Variation, beispielsweise Erhöhung der Temperatur während des Härtungsvorgangs kann die Topfzeit gesteuert, beispielsweise verkürzt werden. So lässt sich beispielsweise durch eine Variation des Anteils an Alkoxysilan-Einheiten in der modifizierten Polymerkette die Vernetzungsdichte und damit das mechanische und physiko-chemische Eigenschaftsprofil der ausgehärteten modifizierten Polymere in weiten Grenzen beeinflussen.

Diese härtbaren Zusammensetzung besteht aus dem nach der oben erwähnten Vorschrift hergestellte Alkoxylierungsprodukt der Formel (I) und weiteren Zusatzstoffen ausgewählt aus der Gruppe der Weichmacher, Füllstoffe, Lösungsmittel, Emulgatoren, Haftvermittler, Additive zur Anpassung des Fließverhaltens, sogenannten Rheologieadditiven und zumindest einem Härtungskatalysator. Bei Bedarf können außerdem Additive zur chemischen Trocknung, und/oder Stabilisatoren gegen thermische und/oder chemische Belastungen und/oder Belastungen durch ultraviolettes und sichtbares Licht in die Formulierung eingebracht werden.

Des Weiteren können die Zusammensetzungen auch an sich bekannte funktionelle Stoffe wie Wasserfänger, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner, Sprühhilfsmittel, Netzmittel, Vitamine, Wuchsstoffe, Hormone, pharmakologische Wirkstoffe, Duftstoffe, Lichtschutzmittel, Radikalfänger, UV-Absorber und/oder weitere Stabilisatoren zugesetzt werden.

Die nach dem erfindungsgemäßen Verfahren hergestellten Alkoxylierungsprodukte können alleine, oder in Abmischung mit einem nach EP 2 093 244 hergestellten Alkoxylierungsprodukt verwandt werden, wobei der Anteil der durch das in dieser Schrift erwähnte Verfahren hergestellten Alkxylierungsproduktes > 20 Gew.-%, bevorzugt > 50 Gew.-% und besonders bevorzugt > 75 Gew.-% betragen sollte.

Die Weichmacher werden ausgewählt aus der Gruppe der Phthalate, der Polyester, Alkylsulfonsäureester des Phenols, Cyclohexandicarbonsäureester oder auch der Polyether, wobei ihr Anteil an der Formulierung 0 Gew.-% bis 90 Gew.-%, bevorzugt 2 Gew.-% bis 70 Gew.-%, besonders bevorzugt 5 Gew.-% bis 35 Gew.-% betragen kann. Als Füllstoffe können gefällte oder gemahlene Kreide, gefällte oder gemahlene Silikate, gefällte oder pyrogene Kieselsäuren, Glaspulver, Glaskugeln, Glashohlkugeln (sog. Bubbles), Metalloxiden, wie z.B. TiO₂, Al₂O₃, Metallhydroxide, wie z.B. Aluminiumhydroxid, Holzmehl, natürliche oder gefällte Bariumsulfate verstärkende Fasern, wie z.B. Glasfasern oder Kohlefasern, lang oder kurzfaserige Wollastonite, Kork, Ruß oder Graphit eingesetzt werden. Die Füllstoffe werden bevorzugt in einer Konzentration von 0 bis 90 Gew.-% bezogen auf die fertige Mischung eingesetzt, wobei Konzentrationen von 5 bis 70 Gew.-% besonders bevorzugt sind. Es ist ferner vorteilhaft hydrophobierte Füllstoffe einzusetzen, da diese Produkte einen geringeren Wassereintrag aufweisen und die Lagerstabilität der Formulierungen verbessern. Viele der genannten Füllstoffe lassen sich entweder nachträglich hydrophobieren oder können durch eine geschickte Prozessführung hydrophobiert hergestellt, oder sogar durch die erfindungsgemäßen Alkoxylierungsprodukte hydrophobiert werden. Die Methoden der Hydrophobierung sind vielfältig und dem Fachmann bekannt.

Die Mischungen können organische Substanzen, bevorzugt Flüssigkeiten und Lösungsmittel enthalten. Die Lösungsmittel dienen dabei beispielsweise der Erniedrigung der Viskosität der unvernetzten Mischungen und begünstigen das Aufziehen auf die Partikeloberfläche. Als Lösungsmittel kommen prinzipiell sämtliche Lösungsmittel sowie Lösemittelmischungen in Betracht. Bevorzugte Beispiele für solche Lösungsmittel sind Ether wie z.B. t-Butyl-methylether, Ester, wie z.B. Ethylacetat oder Butylacetat oder Diethylcarbonat sowie Alkohole, wie z.B. Methanol, Ethanol sowie die verschiedenen Regioisomere des Propanols und Butanols oder auch anwendungsspezifisch ausgewählte Glykoltypen. Weiterhin können aromatische und/oder aliphatische Lösemittel wie auch halogenierte Lösemittel, wie z.B. Dichlormethan, Chloroform, Tetrachlormethan, Fluorkohlenwasserstoffe (FREON) u.a.m zum Einsatz kommen, aber auch anorganische Lösemittel wie beispielsweise Wasser, CS₂, überkritisches CO₂ u.a.m..

Die Rheologieadditive können aus der Gruppe der Amidwachse, zu beziehen z.B. von Cray Valley unter dem Markennamen Crayvallac^{®}, gehärtete Pflanzenöle und Fette, pyrogene Kieselsäuren, wie z.B. Aerosil^{®} R202 oder R805 (beide zu beziehen von Evonik) oder Cab-O-Sil^{®} TS 720 oder TS 620 oder TS 630 (vertrieben von Cabot) ausgewählt werden. Je nach gewünschtem Fließverhalten werden diese Additive in mit einem Anteil von 0 Gew.-% bis 10 Gew.-%, bevorzugt mit einem Anteil von 2 Gew.-% bis 5 Gew.-% an der Gesamtformulierung eingesetzt. Als chemische Trocknungsmittel kann Vinyltrimethoxysilan (Dynasylan^{®} VTMO , Evonik oder Geniosil^{®} XL 10, Wacker AG), Vinyltriethoxysilan (Dynasylan^{®} VTEO, Evonik oder Geniosil^{®} GF 56, Wacker), Vinyltriacetoxysilan (Geniosil^{®} GF 62, Wacker), N-Trimethoxysilylmethyl-O-methyl-carbamat (Geniosil^{®} XL 63, Wacker)N-Dimethoxy(methyl)silylmethyl-O-methyl-carbamat, N-Methyl[3-(Trimethoxysilyl)-propyl]carbamat (Geniosil^{®} GF 60, Wacker), Vinyldimethoxymethylsilan (Geniosil^{®} XL 12, Wacker), Vinyltris(2-methoxyethoxy)silan (Geniosil^{®} GF 58, Wacker) Bis(3-triethoxysilylpropyl)amin (Dynasylan^{®} 1122, Evonik), Bis(3-trimethoxysilylpropyl)amin (Dynasylan^{®} 1124), N-Dimethoxy(methyl)silylmethyl-O-methylcarbamat (Geniosil^{®} XL 65, Wacker) oder oligomere Vinylsilane wie beispielsweise Dynasylan^{®} 6490 und Dynasylan^{®} 6498 (beide zu beziehen von Evonik) alleine oder in Mischung verwandt werden. Die Einsatzkonzentration richtet sich nach dem Stabilisierungsgrad und der Effektivität des Trocknungsmittels, bevorzugt mit einem Anteil an der Gesamtformulierung von 0 bis 5 Gew.-% besonders bevorzugt mit einem Anteil von 0,2 bis 3 Gew.-%. Ferner kann zusätzlich oder alternativ zur chemischen Trocknung ein physikalisches Trocknungsmittel, wie z.B. Zeolithe, Molsiebe, wasserfreies Natriumsulfat oder wasserfreies Magnesiumsulfat verwendet werden. Als Haftvermittler werden die dem Fachmann bekannten Substanzen, vornehmlich Alkoxysilyl-Gruppen tragende Verbindungen die zusätzlich über primäre oder sekundäre Amingruppen, Vinylgruppen, Thiolgruppen, Arylgruppen oder alternativ Oxirangruppen verfügen, wie 3-Aminopropyltrimethoxysilan (Dynasylan^{®} AMMO (Evonik), N-(2-Aminoethyl)-3-aminopropyltrimethoxysilan (Dynasylan^{®} DAMO (Evonik)), 3-Mercaptopropyltrimethoxysilan (Dynasylan^{®} MTMO, Evonik), 3-Glycidylpropyltriethoxysilan (Dynasylan^{®} GLYEO, Evonik) Glycidylpropyltrimethoxysilan (Dynasylan^{®} GLYMO, Evonik), Phenyltrimethoxysilan (Dynasylan^{®} 9165 oder Dynasylan^{®} 9265, Evonik) oder oligomere Amino/Alkyl-Alkoxysilane wie z.B. Dynasylan^{®} 1146 (Evonik), jeweils alleine oder in Mischung eingesetzt. Als Stabilisatoren können die dem Fachmann bekannten Produkte oder Produktkombinationen aus z.B. Tinuvin^{®}-Stabilisatoren (Ciba), beispielsweise Tinuvin^{®} 1130, Tinuvin^{®} 292 oder auch Tinuvin^{®} 400, vorteilhafterweise auch in Kombination, eingesetzt werden. Ihre Einsatzmenge richtet sich nach dem Grad der erforderlichen Stabilisierung. Zusätzlich können der Formulierung Covernetzer zur Steigerung von mechanischer Härte und Reduktion der Fließneigung beigemischt werden. Solche Covernetzer sind typischerweise Substanzen die in der Lage sind 3, 4, oder mehr vernetzungsfähige Gruppen zur Verfügung zu stellen. Beispiele im Kontext dieser Erfindung sind 3-Aminopropyltriethoxysilan, Tetramethoxysilan oder Tetraethoxysilan.

Die so erhaltenen härtbaren Zusammensetzungen sind vorzüglich zur Verklebung und/oder Abdichtung und/oder Verschäumung und/oder Beschichtung von partikulären oder flächigen Substraten geeignet. Ein weiterer Gegenstand der Erfindung ist daher die Verwendung der erfindungsgemäßen Verbindungen der Formel (I) und der sie enthaltenden Zusammensetzungen zum Einsatz in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substraten geeignet. Das in dieser Erfindung beschriebene Alkoxylierungsprodukt ist als Basis einer härtbaren Zusammensetzung hervorragend zur Beschichtung und Modifikation von Oberflächen, Partikeln und Fasern geeignet. Aufgrund der zugrundeliegenden Chemie sind vor allem solche Substrate zu bevorzugen die über polare Oberflächen verfügen. Beispielhaft sollen hier die Anwendungen auf Metallen, hier vor allem die Konstruktionswerkstoffe wie Eisen, Stahl, Edelstahl und Gusseisen, keramischen Materialien, vor allem basierend auf festen Metall- oder Nichtmetalloxiden oder Carbiden, Aluminiumoxid, Magnesiumoxid oder Calciumoxid, sowie mineralische Substrate oder organische Substrate, Kork und/oder Holz genannt werden. Ebenso kann die Zusammensetzung zur Bindung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern genutzt werden.

Als Härtungs-Katalysatoren für die Vernetzung oder Polymerisation der erfindungsgemäßen Präpolymermischungen oder deren chemische Fixierung auf Partikel- oder makroskopischen Oberflächen können die bekannten Polyurethanisierungs-, Allophanatisierungs- oder Biuretisierungskatalysatoren verwendet werden, die dem Fachmann an sich bekannt sind, bzw. die literaturbekannten und üblicherweise zur Hydrolyse und Kondensation von Alkoxysilanen eingesetzten Katalysatoren. Hierzu zählen Verbindungen, wie beispielsweise die üblicherweise verwendeten organischen Zinnverbindungen, wie z.B. Dibutylzinndilaurat, Dioctylzinndilaurat, Dibutylzinndiacetylacetonat, Dibutylzinndiacetat, Dibutylzinndioctoat, oder Dioctylzinndiacetylacetonat. Des Weiteren können auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die **Verwendung von Zinkoctoat** (Zink-2-ethylhexanoat) und der Tetraalkylammoniumverbindungen, besonders bevorzugt diejenige von Zinkoctoat. Des Weiteren können auch Wismutkatalysatoren, z.B. Borchi^{®}-Katalysatoren, Wismutmethansulfonat, Wismutnitrat, Wismutchlorid, Triphenyl-Wismut, Wismutsulfid, sowie Zubereitungen mit diesen Katalysatoren Titanate, z.B. Titan(IV)isopropylat, Eisen(III)-Verbindungen, z.B. Eisen(III)-acetylaceto-nat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Caliumdiacetylacetonat, oder auch Amine, z.B. Triethylamin, Tributylamin, 1,4-Diazabicyclo[2,2,2]octan, 1,8-Diazabicyclo[5.4.0]undec-7-e n , 1 , 5-Diazabicyclo[4.3.0]non-5-e n , N , N-Bis-(N,N-dimethyl-2-aminoethyl)-methylamin, N , N-Dimethylcyclohexylamin, N,N-Dimethylphenylamin, N-Ethylmorpholin etc. oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, p-Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Die erfindungsgemäßen, härtbaren Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,9 Gew.-% bezogen auf den Festgehalt des Verfahrensprodukts eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.

Als weitere Komponenten können die Mischungen vorzugsweise weitere zumeist monomere Silane, Hydroxylgruppen tragende Siloxane oder Lösungsmittel enthalten.

Als weitere Silane können dabei prinzipiell sämtliche Silane, bevorzugt mit hydrolysierbaren Alkoxygruppen, eingesetzt werden und insbesondere Amingruppen oder Vinylgruppen tragende Silane sowie diejenigen, die in der DE 10 2006 054155 oder der WO 2005/003201 beschrieben sind.

Eine weitere erfindungsgemäße Anwendung der Alkoxysilylgruppen tragenden Verbindungen der Formel (I) sind wässerige Emulsionen und Dispersionen. Als Emulgatoren für solche Emulsionen kommen prinzipiell sämtliche anionischen, nicht-ionischen, kationischen und amphoteren Emulgatoren sowie Emulgatormischungen in Betracht. Es eignen sich solche Emulgatoren die über eine mit dem Alkoxylierungsprodukt kompatible Seitenkette und einen hydrophilen Molekülteil verfügen, insbesondere sind solche geeignet, die im hydrophoben Teil über eine propoxylierte Seitenkette verfügen, wie beispielsweise EO/PO-Blockcopolymere (zu beziehen beispielsweise als Synperonic^{®} (Croda) oder Pluronic^{®} (BASF)), die auch in Abmischung mit ionischen oder nichtionischen Emulgatoren verwendet werden können.

Andere bevorzugte Beispiele solcher Emulgatoren sind Alkoholethoxylate, Fettsäureethoxylate, ethoxylierte Ester, und (ethoxylierte) Sorbitanester. Durch Zuschlagsstoffe und Additive, wie z.B. einen nicht wasserlöslicher Weichmacher, können die Eigenschaften der Emulsion an ihr Anwendungsfeld angepasst werden. Abhängig von der Zusammensetzung der härtbaren Mischung kann es in wässriger Emulsion zur Aushärtung der emulgierten Phase, genauer dem Alkoxylierungsprodukt, kommen. Dies ist insbesondere dann der Fall, wenn die härtbare Zusammensetzung so eingestellt ist, dass sie auch in Anwesenheit von Wasser nur langsam aushärtet und somit Zeit zum Emulgieren des Alkoxylierungsproduktes bleibt. Diese entstehenden Dispersionen und ihre Anwendung, beispielsweise als Basis für einen Klebstoff oder Dichtstoff sind ausdrücklich Teil dieser Anmeldung.

Im Rahmen zunehmenden Umweltbewusstseins ist die Zugabe von organischen Lösemitteln zur Erniedrigung der Viskosität von Formulierungen zur Modifizierung von Oberflächen in den letzten Jahren jedoch zunehmend in die Kritik geraten. Als Alternative bietet es sich an, die erfindungsgemäßen Präpolymere in der Form einer, vorteilhaft wässrigen, Emulsion zu applizieren. Emulsionen enthaltend silylfunktionalisierte Präpolymere sind in der Literatur beschrieben worden. Die DE 2558653 beschreibt Emulsionen aus selbstemulgierenden, Silylgruppen tragenden Polyurethanen und deren Anwendung für die Beschichtung von Oberflächen. Die US 4,376,149 beschreibt emulgierte Gemische aus kettenendständig silylierten Polyethern und OH-Siloxanen und deren Einsatz für die Beschichtung von Textilien. Die DE 4215648 beschreibt lagerstabile Kontaktklebstoffe auf Basis von Lösungen beziehungsweise Emulsionen von kationisch modifizierten, alkoxysilanterminierten Polyurethanen. US 6,713,558 und US 6,831,128 beschreiben wasserverdünnbare Emulsionen von silylierten Elastomeren und deren Herstellung, WO 2007/072189 und WO 2008/090458 Emulsionen aus Silylgruppen tragenden Polymeren.

Eine weitere Anwendung der Alkoxysilylgruppen tragenden Verbindungen der Formel (I) sind daher wässerige Emulsionen.

Die wässrige Phase der Emulsionen kann hydrophile, anorganische Füllstoffe zur Modifizierung der mechanischen Eigenschaften der erfindungsgemäßen Beschichtungen enthalten mit der Maßgabe, dass diese hydrophile Füllstoffe nachträglich zu der bereits stabilisierten Emulsion zugegeben werden. Vorteilhaft kann es sein, wenn die Oberfläche der eingesetzten Füllstoffe mindestens eine funktionelle Gruppe aufweist, so dass es nach Eintrocknen beziehungsweise Brechen der Emulsion zu chemischen Reaktionen zwischen reaktiven funktionellen Gruppen des Alkoxylierungsprodukts der Formel (I) mit denen auf der Füllstoffoberfläche kommt. Beispiele solcher Füllstoffe sind pyrogene und gefällte Kieselsäure, anorganische Oxide wie Aluminiumoxid, Titandioxid und Zirkondioxid, Glas und Quarz, Hydroxide wie Aluminium- und Magnesiumhydroxid, Silicate wie Wollastonit, Glimmer, Kaolin und Talk, Calciumcarbonat und andere Carbonate, Metalle wie Kupfer, Zink und Nickel und Metalllegierungen sowie Graphit und Ruß. Des Weiteren kann die Emulsion niedrigmolekulare, organofunktionelle und wasserunlösliche Silane enthalten, wie vorher beschrieben. Die Emulsion kann ebenfalls die vorher beschriebenen Katalysatoren zur Fixierung des Alkoxylierungsproduktes auf einer Oberfläche enthalten.

Ein weiterer Gegenstand der Erfindung ist die Herstellung von flammhemmenden thermoplastischen Polymercompounds oder duroplastischen Formmassen enthaltenden die Alkoxylierungsprodukte der Formel I, die darüber hinaus flammschützende und/oder flammenhemmende Substanzen wie beispielsweise ATH (Aluminiumtrihydrat = Aluminiumhydroxid = Aluminiumtrihydroxid), MDH (Magnesiumdihydroxid), Hydromagnesite oder Melamincyanurat, enthalten können. Derartige Polymercompounds werden beispielsweise für die Herstellung von Kabelisolationsmaterialien auf Basis von Polypropylen, Polyethylen oder Ethylvinylacetat für Kabel und Kabelummantelungen eingesetzt oder es werden z.B. auf Basis von Polypropylen flammgeschützte Trennwände hergestellt, die in öffentlichen Gebäuden wie z.B. Sporthallen besonders hohen Anforderungen unterliegen.

Die so ausgerüsteten Flammschutzmassen, -compounds oder auch Elektrokabel weisen gegebenenfalls eine verbesserte mechanische Stabilität, verbesserte Dispergierung weiterer Additive, gute Extrudierbarkeit auch bei hohem Füllgrad mit partikulären Additiven (beispielsweise mit Talk, Calciumcarbonat, u.a.) sowie verbesserten Flammschutz und ggf. eine geringere Rauchentwicklung bei starker Erhitzung auf. Insbesondere bei der Verwendung Siloxangruppen aufweisender Alkoxylierungsprodukte kann durch den Siliciumgehalt eine zusätzliche Stabilität im Brandfall gegeben sein, da nach Abbrand ein zusätzlich stabilisierend wirkender und brandhemmender Anteil an SiO₂ zurückbleibt. Außerdem wird bereits beim Abbrand zu einem früheren Zeitpunkt eine sogenannte Hautbildung forciert, die das weitere Ansteigen der Massetemperatur reduziert und damit das Voranschreiten des Brandes hemmt, was z.B. bei Kabeln, die von einem Raum in den nächsten Raum führen, besonders relevant ist.

Sollen diese erfindungsgemäßen Zusammensetzungen schäumbar sein, enthalten diese ein oder mehrere, gegebenenfalls chemisch gebildete oder physikalisch wirkende Treibmittel.

Die zu beschichtenden Oberflächen können durch bekannte Mittel wie Sprühen, Streichen, Tauchen, etc. beschichtet werden. Die zu verklebenden Oberflächen werden bei dem Verfahren vorzugsweise aufeinandergepresst. Das Aufbringen der gegebenenfalls schäumbaren Mischung zur Herstellung der Verklebung erfolgt vorzugsweise aus einer Druckdose, wobei die Schaumbildung durch das in der Mischung enthaltene, gegebenenfalls auch durch chemische Reaktion freigesetzte, Treibmittel erfolgt. Die Herstellung und Anwendung von Klebschäumen ist in der Schrift DE 10 2008 043218 näher beschrieben.

Somit ist ein weiterer Gegenstand der Erfindung eine schäumbare härtbare Zusammensetzung enthaltend zumindest eine Verbindung der Formel (I) und mindestens ein chemisches oder physikalisches Treibmittel, die zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Als Treibmittel sind bereits bei relativ geringen Drücken kondensierbare Gase geeignet, die auch zur Herstellung sprühbarer Montageschäume verwendet werden. Gängige Treibmittel sind beispielsweise Kohlenwasserstoffe mit jeweils 1 bis 5, insbesondere 3 bis 5 Kohlenstoffatomen, insbesondere Propan-Butan-Mischungen oder Isobutan, Fluorkohlenwasserstoffe mit 1-5 Kohlenstoffatomen, z.B. 1,1,1,2-Tetrafluorethan oder 1,1-Difluorethan, oder Dimethylether sowie entsprechende Mischungen. Der Treibmittelgehalt liegt vorzugsweise bei < 10 Gew.-%, besonders bevorzugt bei < 7 bzw. < 5 Gew.-% bezogen auf die gesamte Mischung.

Bevorzugt liegt der Gehalt der Treibmittel bezogen auf die gesamte Mischung bei maximal 10 Gew.-% besonders bevorzugt bei maximal 7 Gew.-%.

Die Schaumbildung kann auch ohne Zugabe eines Treibmittels auf rein chemischer Basis erfolgen, hier allerdings bevorzugt im Fall einer Warm- oder Heißhärtung. Hierbei wird bei Erwärmung der Klebemischung ein niedrigflüchtiges Treibmittel gebildet, das beispielsweise Alkohole wie Methanol, Ethanol umfasst, die aus der Hydrolyse der Alkoxysilylgruppe entstanden sind. Auch kann Wasser oder ein inertes Lösungsmittel bei erhöhter Temperatur als Treibmittel dienen.

Wird eine Beschichtung eines Substrats erwünscht, so kann in einfacher Weise auf das Treibmittel verzichtet werden, und gegebenenfalls durch Zugabe von Lösungsmitteln oder weiteren Additiven und Hilfsstoffen, die für Beschichtungen erforderlichen Materialeigenschaften gezielt eingestellt werden. Gegenstand der vorliegenden Erfindung ist deshalb auch ein Verfahren zum Beschichten bzw. zum Modifizieren von Oberflächen, wobei eine Zusammensetzung, die das Alkoxylierungsprodukt mit mindestens einer weiteren Aminosilanverbindung oder Vinylsilanverbindung enthält, auf die zu behandelnde Oberfläche appliziert und ausgehärtet wird.

Partikeloberflächen solider oder auch poröser Partikel können erfindungsgemäß mit aus dem Stand der Technik bekannten Methoden oberflächenbeschichtet werden. Dazu gehört das Aufdüsen des Alkoxylierungsproduktes auf die Partikel unter beispielsweise Vermischung, Verknetung und/oder Erwärmen gegebenenfalls in Gegenwart geeigneter Vernetzungskatalysatoren. Ebenso können die erfindungsgemäßen Alkoxylierungsprodukte rein oder aus geeigneten organischen und/oder anorganischen Lösemitteln auf die Partikeloberflächen aufgebracht werden, wo sie dann unter kovalenter Anbindung ausreagieren können. Ebenso ist es möglich, Emulsionen aus den erfindungsgemäßen Alkoxylierungsprodukten der Formel (I) in geeigneten Medien, ggf. unter Zusatz von Hilfsstoffen, weiterer Modifizierungsmittel und Emulgatoren und/oder Netzmitteln, auf die Partikeloberflächen aufzubringen. Auch die Modifizierung von Partikeloberflächen in einer Matrix (vor-)dispergierter Partikel, beispielsweise von in einem Polymer oder einem Lack (vor-)dispergierten partikulären Füllstoffen oder funktionellen Partikeln, ist durch Zugabe des Alkoxylierungsproduktes zu den entsprechenden Systemen unter Durchmischung möglich, ggf. unter Erwärmung und/oder der Zugabe eines geeigneten Katalysators. In jedem Fall können den Alkoxylierungsprodukten noch weitere Komponenten, wie beispielsweise monomere, oligomere oder polymere Silane oder reaktive Silylgruppen tragende andere Komponenten sowie nach einem anderen Mechanismus aushärtende oder aufziehende Materialien, wie beispielsweise Acrylate, Epoxide, Isocyanate, Carboxylate, Hydroxide, Lactone, Lactame u. a. m, beigemischt sein. Auch können mehrere der Alkoxylierungsprodukte miteinander gemischt verwendet werden.

Zu den zu modifizierenden Partikeln unterschiedlicher Herkunft, unterschiedlicher Größe bzw. Partikelgrößenverteilung sowie unterschiedlicher Morphologie (sphärisch, plättchenförmig (mit unterschiedlichen Aspektverhältnissen), faserig, fraktal aggregiert, würfel- oder quaderförmig u.a.m) und unterschiedlichen Agglomerationszuständen gehören beispielsweise oxidische Partikel, wie pyrogene Kieselsäure, beispielsweise AEROSIL^{®}e der EVONIK Degussa GmbH, Fällungskieselsäuren, beispielsweise SIPERNAT^{®}e der EVONIK Degussa GmbH, Quarzpartikel und weitere anorganische Oxidpartikel, wie Glaspartikel, Titandioxid, wie z. B. AEROXIDE^{®} TiO₂ P25 und AEROXIDE^{®} TiO₂ P90 der EVONIK Degussa GmbH, Aluminiumoxid, wie z. B. AEROXIDE^{®} Alu C der EVONIK Degussa GmbH, Zirkondioxid und/oder Cerdioxid, Eisenoxide, Kupferoxide u.a.m., silikatische Partikel wie beispielsweise Partikel aus Kaolin, Wollastonit, Talkum, Glimmer, Feldspäten u.a.m., Hydroxide wie Aluminiumtri- und/oder Magnesiumdihydroxid, Böhmit, Hydrotalcit und hydroxydische Eisenpigmente, wie beispielsweise FeO(OH), Carbonate, wie beispielsweise Calciumcarbonat und/oder Dolomit, Metalle wie Eisen, Kupfer, Zink, Nickel, Aluminium, Magnesium u.a.m, Metalllegierungen und/oder kohlenstoffhaltige Materialien, wie beispielsweise Graphit und/oder Ruß u. a. m.

Als organische partikuläre Substrate einsetzbar sind Partikel aus z. B. aus

Siliconharzen, organomodifizierten Siliconen, organischen Polymeren und/oder Biopolymeren, organischen Polyelektrolyten, Melamincyanurat u.a.m.

Die unterschiedlichen Partikel können auch im Gemisch oberflächenmodifiziert werden.

Das Verhältnis von Partikelmasse zu Oberflächenmodifikator ist abhängig von der zugänglichen Partikeloberfläche, dem gewünschten Modifizierungsgrad und dem Molekulargewicht des Modifizierungsagenzes. Bezogen auf die Masse der zu modifizierenden Partikel kann das erfindungsgemäße Modifizierungsagenz im Massen-Verhältnis von Partikelmasse: Modifizierungsmittelmasse im Bereich von 1:10 bis 1.000.000:1, bevorzugt von 1:1 bis 10.000:1 und besonders bevorzugt im Bereich von 2:1 bis 1.000:1 liegen.

Betrachtet man das Partikelgewicht im Verhältnis zur gesamten Mischung, die zur Oberflächenmodifizierung eingesetzt wird, bestehend aus Zusammensetzungen enthaltend den oder die Alkoxylierungsprodukte, ggf. Katalysator, Lösemittel, weitere Silanverbindungen, sowie sonstiger Hilfsstoffe, so kann das Massen-Verhältnis von Partikelgewicht:Modifizierungsmischung im Bereich von 1:1.000 bis 100.000:1, bevorzugt im Bereich von 1:100 bis 1.000:1, besonders bevorzugt im Bereich 2:1 bis 1.000:1 liegen.

Makroskopische Oberflächen können gleichfalls nach den aus dem Stand der Technik bekannten Methoden mit den Alkoxylierungsprodukten beschichtet werden. Dabei können die Alkoxylierungsprodukte entweder in Reinform oder aber in Abmischung mit weiteren Komponenten, z. B. anorganischen und/oder organischen Lösemitteln, reaktiven Komponenten wie mono-, oligo- oder polymeren Silanen, Acrylaten, Epoxiden, Hydroxyverbindungen, Aminen u.a.m. sowie weiteren Beschichtungskomponenten oder Hilfsstoffen, zur Oberflächenmodifizierung eingesetzt werden.

Die Applikation der Alkoxylierungsprodukte kann dabei in Reinform pur, in organischen oder anorganischen Lösemitteln, als wässerige Emulsionen oder in Kombination mit andersartig funktionalisierten Modifizierungsmitteln wie beispielsweise Epoxiden, Acrylaten, Aminen, Isocyanaten, Urethane und/oder anderen Polymeren, als Mischungen der Alkoxylierungsprodukte mit monomeren Silanen, wie beispielsweise Aminosilane und Vinylsilane und/oder anderen Silylgruppen tragenden Polymeren, erfolgen.

Die Modifizierung makroskopischer Oberflächen mit den beschriebenen Materialien kann beispielsweise mit den aus dem Stand der Technik bekannten Verfahren wie Tauch-, Spray- oder Spin-Beschichtung, Fluten, Vernebeln, Aufpinseln, Aufrollen, Aufdrucken, Siebdrucken, Aufstempeln und - bei geeigneter Konsistenz der zur Oberflächenmodifizierung verwendeten erfindungsgemäßen Rezepturen - auch durch Pulverbeschichtungsverfahren durchgeführt werden. Weiterhin ist es auch möglich, Emulsionen aus den Alkoxylierungsprodukten in geeigneten organischen und/oder anorganischen Lösemitteln, ggf. unter Zusatz weiterer Stoffe wie z. B. Beschichtungskomponenten, Hilfsstoffen, wie beispielsweise Netzmitteln, Emulgatoren und/oder Rheologieadditiven, sowie Füllstoffe und/oder funktioneller Partikel, zur Modifizierung der Oberflächen zu verwenden.

Dies gestattet es, unterschiedlichste Oberflächen, bestehend zum Beispiel aus Metalloxiden, Mischoxiden, Nitriden, Hydroxiden, Carbiden, Carbonaten, Silikaten, Pigmenten, Rußen, Elementen oder Legierungen sowie auch Oberflächen aus organischen Materialien zu modifizieren. Darüber hinaus sind natürlich auch die Oberflächen organischer Partikel, wie solcher aus Siliconharzen, organomodifizierten Siliconen, organischen Polymeren oder Biopolymeren, einer Oberflächenmodifizierung zugänglich.

Beispiele derartiger Oberflächen sind makroskopische und mikroskopische Oberflächen wie Oberflächen aus Glas, Lacken, Metallen, Halbleitermaterialien, oxidischen Materialien wie Steinen, Betonen oder Mörteln, Holz, organischen und anorganischen Fasern, Geweben und Partikeln, Polymeren, Biopolymeren u. a. m.

Damit können die Alkoxylierungsprodukte beispielsweise als Grundstoffe für die Herstellung von Klebstoffen, als reaktive Vernetzer, als Haftvermittler und Primer sowie Bindemittel für Metalle, Glas und Glasfasern/Glasgewebe, Holz, Holzwerkstoffen, Naturfasern, zur Ausrüstung und Behandlung von gegebenenfalls textilen Flächengebilden und Fasern aus natürlichen und/oder synthetischen sowie mineralischen Rohstoffen sowie beispielsweise auch Kork, Leder, Papier, Tissue, silikatischen und oxidischen Materialien dienen.

Die Anwendungsmöglichkeiten derart modifizierter Formkörper, Oberflächen oder Partikeloberflächen sind vielfältig. So können derart behandelte Partikel beispielsweise als Füllstoffe für Polymere bzw. die Herstellung von Polymercompounds, Nanokomposite und Masterbatches verwendet werden. Eine gute Übersicht über funktionale Füllstoffe in Polymeren bietet "Functional Fillers for Plastics", Edited by Prof. Dr. Marino Xanthos, WILEY-VCH Verlag GmbH & Co. KgaA, Weinheim, 2005, ISBN 3-527-31054-1. Die Verwendung der erfindungsgemäßen Alkoxylierungsprodukte kann dabei dergestalt sein, dass man entweder die zu modifizierenden Partikel in einem vorangeschalteten Prozess modifiziert und dann im Polymer dispergiert, ebenso ist es aber auch möglich, die Alkoxylierungsprodukte bei der Dispergierung der Füllstoffe im jeweiligen Polymer zuzusetzen, beispielsweise über eine Flüssigdosierung im Extruder unter Nachschaltung einer effektiven Dispergierstrecke. Überraschenderweise gelingt i. d. R. die Partikeloberflächenmodifizierung mit den Alkoxylierungsprodukten der Formel I ohne ein Verklumpen oder Aggregieren der zu modifizierenden partikulären Materialien trotz des multifunktionellen Charakters des Alkoxylierungsproduktes der Formel I. Weiterhin können erfindungsgemäß oberflächenmodifizierte Partikel beispielsweise eingesetzt werden als Füllstoffe oder funktionale Additive in Lacken, Polymercompounds, Nanokomposites, Masterbatches oder Flüssigpasten, polymeren Schäumen, organischen Harzen oder Silikonharzen, ggf. unter reaktiver Anbindung an die jeweiligen Matrices, als Melt-Flow-Index-Improver in Spritzgussanwendungen, zur Erzielung physikalischer Effekte auf Oberflächen, wie z. B. Superhydrophobie, temperaturabhängiger Benetzbarkeit, Abperleffekten, Beeinflussung des Anschmutzungsverhaltens und des Schmutzentfernungsverhaltens an festen Oberflächen auf Bauten, Textilien oder Fasern sowie der Anhaftung von Kondensaten und Eis an mit den erfindungsgemäßen beschichteten ausgerüsteten Oberflächen und Partikeln, als Gleitadditive bzw. Schmiermittel, in Versiegelungen, zur Erzielung von haptischen Effekten, wie beispielsweise eines seidigen Griffes (Soft-Touch-Oberflächen) oder einer bestimmten Oberflächengriffigkeit oder -rauhigkeit (Grip), als Mattierungsmittel, als Anbindungsstellen für weitere Materialien, wie beispielsweise andere Beschichtungsmaterialien, als Ad- oder Absorbentien in beispielsweise Papier- oder Filtermaterialien oder Stoffen, als selbstdispergierbare Partikel zur Herstellung von Dispersionen, als partikuläre Emulgatoren (für sog. "Pickering-Emulsionen" (s. a. "Emulsions", Spencer Umfreville Pickering, Journal of the Chemical Society, Transactions (1907), 91, 2001-2021), als reaktive und/oder vernetzbare Partikel, ggf. dispergiert in flüssigen Medien, als wirksame Komponenten in Entschäumern, in Bautenschutzmitteln, beispielsweise als aktive Komponenten zur integralen Massenhydrophobierung, als strukturierte, hydrophobe Komponente zur Oberflächenhydrophobierung oder als Träger für aktive, flüssige Komponenten, als (ggf. reaktive) Verkapselungsmittel, wie z. B. für Core-Shell-Partikel oder zur Mikroverkapselung flüssiger Systeme, zur Modifizierung von Membranmaterialien, bspw. zur Erzielung einer bestimmten, einstellbaren Porosität, Selektivität oder Permeabilität, als antistatische Additive, beispielsweise nach einer hydrophilen oder hygroskopischen Partikeloberflächenmodifizierung, als Rieselhilfsmittel, als Additive zur Erzielung oder Verbesserung der Kratzfestigkeit der mit den Partikeln ausgestatteten Materialien oder Oberflächen oder als partikuläre Additive mit weiteren Funktionen, beispielsweise als mikrobizide Additive, als Fluoreszenzmarker oder als Effektpigmente, als Trennmittel, als Bestandteile für tieftemperaturbeständige Kabelbeschichtungen, als Herstellungskomponenten von Gummiteilen und Membranen, als Schlichte oder Bestandteile für Schlichten in der Textil- und Glasfaserindustrie, für Papier, als Additive für Toner, als Abrasiva oder Faltenkaschierungsmittel in Kosmetika, als über einen längeren Zeitraum hinweg Wirkstoffe oder Hilfsstoffe freisetzende Formulierungsbestandteile bzw. Trägermaterialien, wobei als freizusetzende Substanzen beispielsweise kosmetische Öle und Wirkstoffe, Duftstoffe, pharmazeutische Wirkstoffe, antimikrobielle Wirkstoffe, auch zum Beispiel Silber und silberhaltige Verbindungen, sowie Farb- und Konservierungsstoffe in den Partikeln vorhanden sein können, u.a.m..

Die erfindungsgemäßen Alkoxylierungsprodukte können alleine oder als Additive in wässrigen Systemen zur Behandlung der genannten Flächengebilde und Fasern genutzt werden und ermöglichen damit den Einsatz der so ausgerüsteten Formkörper, Flächengebilde und Fasern im Hygiene-, Medizin-, Bau-, Automobil-, Heimtextil-, Bekleidungstextil-, Sport- und Agrarbereich.

Den so oberflächenmodifizierten Partikeln oder Flächengebilde kommen damit neue oder optimierte Eigenschaften zu, wie beispielsweise in Bezug auf Weichheit, Gleiten, Wassertransport/-aufnahme, Wasser-/Ölabweisung, UV-Schutz, Selbstreinigung (Lotus Effekt) für z.B. Markisen, Flammschutz, Erhöhung der Festigkeit bei höchstmöglicher Flexibilität, Antistatik, Resistenz gegen Bakterien, Viren, Chemikalien.

Ein weiterer Gegenstand der Erfindung ist somit die unter Verwendung der Zusammensetzungen enthaltend die erfindungsgemäßen Alkoxylierungsprodukte hergestellten, oben genannten beschichteten Artikel wie beispielsweise Flächen, Formkörpern, Partikel, Gewebe, Stoffe und ähnlichen Materialien.

Ein weiterer Gegenstand der Erfindung sind Dichtungsmassen und/oder Klebemassen enthaltend die erfindungsgemäßen Alkoxylierungsprodukte wobei auch eine Oberflächenbeschichtung selbst bereits abzudichten oder zu kleben vermag, und diese Dichtungs- und/oder Klebemassen insbesondere Gleitadditive wie beispielsweise auch MoS₂ oder PTFE-Partikel enthalten können.

Weiterhin können die erfindungsgemäßen Alkoxylierungsprodukte auch bei der Herstellung von elektrischen und/oder elektronischen Bauteilen wie beispielsweise auch OLEDs, Solarpanels Verwendung finden. Dabei können als Additive leitfähige Partikel oder ionische Flüssigkeiten enthalten sein und damit den Einsatz in leitfähigen Beschichtungen und leitfähigen Klebern, beispielsweise in Leiterbahnen, zur Kontaktierung und/oder antistatischen Ausrüstung, ermöglichen.

Ein weiterer Gegenstand der Erfindung sind Verbundwerkstoffe wie beispielsweise Wood-Plastic-Composites (WPC) die unter Verwendung der Verbindungen der Formel (I) hergestellt werden, WPC's sind thermoplastisch verarbeitbare Verbundwerkstoffe, die aus unterschiedlichen Anteilen von Holz, Kunststoffen und Additiven bestehen, und durch thermoplastische Formgebungsverfahren, wie z.B. Extrusion, Spritzguss oder Presstechniken, verarbeitet werden. Gegenüber Polypropylen-Maleinsäureanhydrid-gepfropften Copolymeren weisen die neuartigen Silylpolyether-Composites eine verbesserte Anbindung an die Holz- oder Fasergrundkörper dieser Werkstoffe auf. Die Alkoxylierungsprodukte binden dabei an die Fasern auf Basis Holz, Kokos oder anderen natürlich verfügbaren Faserprodukten unter Gleichzeitiger Hydrophobierung dieser Oberfläche auf und garantieren dadurch eine reduzierte Trockenzeit der Holzfaserpellets (Energieeinsparung!). Im Gegensatz zu gewöhnlichen anorganischen Füllstoffen können hier bereits niedermolekulare Produkte eine sehr gute compatibilisierende Wirkung entfalten, denn bei schnellen Extrusionsprozessen sind sie deutlich schneller homogen in Sekunden zu verteilen als die PP-MAA-Polymere.

Ein weiterer Gegenstand der Erfindung sind Pulverlackhärter mit definierter Glycidylfunktionalität und verbesserter Verträglichkeit und/oder Haftung (Haftverbesserung) mit dem Untergrund, und wodurch Korrosionsunterwanderung in Pulverlackfassadenanwendungen reduziert wird. Die Haftverbesserung ist insbesondere bei oxidischen oder silikatischen Oberflächen wie beispielsweise Mörtel, Estrich oder Zement von wesentlicher Bedeutung.

Ein weiterer Gegenstand der Erfindung sind Flüssigpasten, in denen man die erfindungsgemäßen Alkoxylierungsprodukte anstelle beispielsweise eines gewöhnlichen Polyetherpolyols (PPG 1000), welches im Allgemeinen die zusätzliche Verwendung eines Dispergiermittels erfordert, alleinig verwendet, da das Alkoxylierungsprodukt der Formel (I) die Eigenschaften beider Stoffe auf sich vereinigt. Derartige Pasten, die als Farbmittel Pigmente enthalten oder ggf. zusätzlich Farbstoffe u.a. Additive enthalten können, werden für die Einfärbung von polyolbasierten Systemen wir z.B. PU-Schaumstoffen, thermoplastischen Urethanen oder Ähnlichem verwendet.

Ein weiterer Gegenstand der Erfindung ist die Verwendung des Alkoxylierungsproduktes und daraus hergestellter Formulierungen beispielsweise auch zur Herstellung kosmetischer Produkte. So können die erfindungsgemäßen Produkte in einer Formulierung zur permanenten oder nicht-permanenten Behandlung von Haut, Haaren oder Hautanhangprodukten eingesetzt werden, um z.B. einen besonders lang anhaltenden positiven sensorischen Effekt zu erzielen. Hierbei sind besonders solche Produkte vorteilhaft die durch besonders hydrophobe Segmente oder durch kationische Monomere in Wechselwirkung mit organischen Substraten treten, und somit einfach auf diesen abgeschieden werden können. Die Alkoxysilylfunktion kann durch Reaktionen mit OH-Gruppen der Haut- oder Haaroberfläche eine permanente Anbindung an diese Oberflächen gewährleisten. Auch können die erfindungsgemäßen Alkoxylierungsprodukte als Additive in Lack- oder Nagellackformulierungen verwendet werden.

Ein moderner Nagellack oder eine Nagelbeschichtungszusammensetzung dient dazu, eine ansprechende Form und Färbung von Finger- und Fußnägeln bereitzustellen. Zusätzlich wird der Nagel gegen Umwelteinflüsse geschützt und eine Härtung der Nagelplatte oder der Nageloberfläche gewährleistet. Besondere Anstrengungen werden unternommen um Nagellackbeschichtungen langlebig, kratz- und splitterunempfindlich, glänzend in attraktiven Farben und Brillanz bereitzustellen. Nagellacke beinhalten (daher) eine große Anzahl verschiedenster Inhaltsstoffe, von denen die besonders wichtigen Filmbilder, Haftvermittler, Weichmacher, Lösungsmittel und Pigmente sind. Pyrogene Kieselsäure wird als Rheologie- und Thixotropie-Modifizierer verwendet. US Pat No. 4,873,077, GB 1177420 und DE 69111621 beschreiben eine Vielzahl von Additiven um einen guten Tragewiderstand, gute Splittervermeidung, das Brechen und Einreißen der Nägel und die Langlebigkeit nach dem Trocknen des Nagellacks als flexibler, gut haftender harter Film auf dem Nagel zu gewährleisten.

Weiterhin ist es mit den erfindungsgemäßen Alkoxylierungsprodukten auch möglich, gezielt physikalische Effekte auf festen Substraten hervorzurufen, wie beispielsweise hydrophobe oder hydrophile Oberflächeneigenschaften. Dabei können derartige Effekte weiterhin auch noch einem zusätzlichen Stimulus unterliegen, wie beispielsweise der herrschenden Temperatur. Literaturbekannt weisen Polyether in Wasser temperaturabhängig sogenannte Trübungspunkte auf, die aus der Inkompatibilisierung zum umgebenden Medium bei steigender Temperatur resultieren. Es konnte gezeigt werden, dass es gelingt, über die Anbindung silylmodifizierter Polyetherketten an unterschiedlichen Oberflächen deren Kontaktwinkel gegenüber verschiedenen Flüssigkeiten, beispielsweise Wasser, temperaturabhängig zu gestalten.

Für die erfindungsgemäßen Zusammensetzungen existieren zahllose verschiedene Anwendungen im Bereich der Kleb-, Dicht-, Binde- und Fugendichtstoffe. Dabei sind sie für zahllose unterschiedliche Untergründe, wie z.B. mineralische Untergründe, Metalle, Kunststoffe, Glas, Keramik, Holz, Holzwerkstoffe, Naturfaser, Haut, Haar, Hautanhanggebilde, Horn oder auch Kork etc., geeignet. Prinzipiell eignen sich die Zusammensetzungen bzw. die daraus hergestellten Schäume zum Verkleben von jedweden Gegenständen. Vor allem aber sind sie hoch geeignet, wenn die zu verklebenden Flächen uneben sind oder aber kleinteilige Fasern oder Partikel, sowie auch beispielsweise Kork, miteinander zu einem Verbundwerkstoff verbunden werden sollen. Dies ist z.B. beim Verkleben von Bruchstellen, die durch Absplitterungen oder Materialverbiegungen nicht mehr genau übereinander passen, der Fall, oder auch beim Verkleben von Fußleisten, Deckenleisten oder sonstigen Verzierungen auf einer unebenen Wandoberfläche. Hier besitzen die Schäume den Vorteil, auch Hohlräume gut ausfüllen zu können.

Die erfindungsgemäßen modifizierten Alkoxylierungsprodukte un d die entsprechenden Verfahren zu deren Herstellung werden nachfolgend beispielhaft beschrieben, ohne dass die Erfindung als auf diese beispielhaften Ausführungsformen beschränkt angesehen werden kann.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Weitere Gegenstände der Erfindung ergeben sich aus den Ansprüchen, deren Offenbarungsgehalt vollumfänglich Bestandteil dieser Beschreibung ist.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Herstellung von Alkoxysilylgruppen tragenden Polyetheralkoholen nach erfindungsgemäßem Verfahren mit Hilfe von DMC-Katalysatoren. OH-Zahlen wurden nach der Kaltacetylierungsmethode in Anlehnung an die Analysenvorschrift C-V 17A (98) der Deutschen Gesellschaft für Fettwissenschaft (DGF) durchgeführt, bestimmt. Die mittleren Molmassen wurden aus den so bestimmten OH-Zahlen oder per GPC bestimmt. Der Epoxidsauerstoffgehalt der Endprodukte wurde in Gegenwart von HCI conc. nach dem Prinzip der Rücktitration mit Natronlauge bestimmt. Die Viskosität der Produkte wurde mit Hilfe eines Rheometers (MCR 301, Anton Paar) bestimmt. Zur Messung wurde eine Platte/Platte-Geometrie mit einem Durchmesser von 50 mm genutzt. Die GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Beispiel 1: alkoxysilyliertes Alkoxylierungsprodukt mit Methyl-Rest in alpha Stellung zur Hydroxylgruppe - nicht erfindungsgemäß

Herstellung von Alkoxysilylgruppen tragenden Polyetheralkoholen mit Hilfe von DMC-Katalysatoren gemäß dem in EP 2 093 244 offenbarten Verfahren. Der Epoxidsauerstoffgehalt der Endprodukte wurde in Gegenwart von HCl conc. nach dem Prinzip der Rücktitration mit Natronlauge bestimmt.

In einem 3 Liter Autoklaven werden 140 g Polypropylenglykol (mittlere Molmasse 700 g/mol) und 0,22 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Eine kleine Menge Propylenoxid wird zur Aktivierung des DMC-Katalysators und nach 15 min und Anspringen der Reaktion werden 1032 g Propylenoxid bei 130 °C unter Kühlen innerhalb von 1 h zugespeist. Anschließend werden gleichzeitig 111 g 3-Glycidyloxypropyltriethoxysilan (DYNASYLAN^{®} GLYEO) sowie 1520 g Propylenoxid kontinuierlich und unter Kühlen innerhalb von 1,5 h bei 100 °C zudosiert. An die 90 minütige Nachreaktion bei 100 °C schließt sich die Entgasungsstufe an. Das fertige Alkoxylierungsprodukt wird auf unter 80 °C abgekühlt und aus dem Reaktor abgelassen.

Das erhaltene Alkoxylierungsprodukt enthält im Mittel pro Molekül 2 Trialkoxysilyleinheiten und hat eine mittlere Molmasse von 14000 g/mol. Freie Epoxidgruppen sind im Endprodukt nicht nachweisbar. Die Viskosität des Alkoxylierungsprodukts, bestimmt mit einem kalibrierten Rheometer, beträgt bei 25°C und einer Scherrate von 10 ¹/s ca. 20-25 Pa*s.

Der mit Hilfe eines Sn-Katalysators (c: 0,3%) (Dioctyl-Zinn-Diketonat, TIB^{®} KAT 223 (TIB Chemicals) im Normklima (T: 23°C, RLF: 50%, 7 Tage) gehärtete Silyl-Polyether nach Beispiel 1 wurde angelehnt an DIN 53 504 mit einer Prüfgeschwindigkeit von 200 mm/Min. geprüft. Die ermittelte Bruchdehnung betrug 55% ± 3%.

### Beispiel 2: alkoxysilyliertes Alkoxylierungsprodukt mit Ethylrest in alpha Stellung zur Hydroxylgruppe - erfindungsgemäß

In einem 3 Liter Autoklaven werden 400 g Polypropylenglykol (mittlere Molmasse 2000 g/mol) und 0,26 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 45 g Propylenoxid zugeführt. Nach 20 min und Anspringen der Reaktion werden 732 g Propylenoxid bei 130 °C unter Kühlen innerhalb von 40 min zugespeist. Anschließend werden gleichzeitig 111 g 3-Glycidyloxypropyltriethoxysilan (DYNASYLAN^{®} GLYEO) sowie 1520 g Propylenoxid kontinuierlich und unter Kühlen innerhalb von 1,5 h bei 110 °C zudosiert. Nach einer Haltezeit von 30 min werden 89 g Butylenoxid bei 110 °C zugeführt. Nach 90 min Nachreaktion bei 110 °C schließt sich die Entgasungsstufe an. Das fertige Alkoxylierungsprodukt wird auf unter 80 °C abgekühlt und aus dem Reaktor abgelassen.

Das erhaltene Alkoxylierungsprodukt enthält im Mittel pro Molekül 2 Trialkoxysilyleinheiten und hat eine mittlere Molmasse von 14500 g/mol. Freie Epoxidgruppen sind im Endprodukt nicht nachweisbar. Die Viskosität des Alkoxylierungsprodukt, bestimmt mit einem kalibrierten Rheometer, beträgt bei 25°C und einer Scherrate von 10 1/s ca. 22-30 Pa*s. Der mit Hilfe eines Sn-Katalysators (c: 0,3%) (Dioctyl-Zinn-Diketonat, TIB^{®} KAT 223 (TIB Chemicals) im Normklima (T: 23°C, RLF: 50%, 7 Tage) gehärtete Silyl-Polyether nach Beispiel 2 wurde angelehnt an DIN 53 504 mit einer Prüfgeschwindigkeit von 200 mm/Min. geprüft. Die ermittelte Bruchdehnung betrug 103% ± 3%.

### Beispiel 3: alkoxysilyliertes Alkoxylierungsprodukt mit Ethylrest in alpha Stellung zur Hydroxylgruppe - erfindungsgemäß

In einem 3 Liter Autoklaven werden 400 g Polypropylenglykol (mittlere Molmasse 2000 g/mol) und 0,26 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 45 g Propylenoxid zugeführt. Nach 20 min und Anspringen der Reaktion werden 732 g Propylenoxid bei 130 °C unter Kühlen innerhalb von 40 min zugespeist. Anschließend werden gleichzeitig 111 g 3-Glycidyloxypropyltriethoxysilan (DYNASYLAN^{®} GLYEO) sowie 1520 g Propylenoxid kontinuierlich und unter Kühlen innerhalb von 1,5 h bei 85 °C zudosiert. Nach einer Haltezeit von 30 min werden 89 g Butylenoxid bei 85 °C zugeführt. Nach 90 min Nachreaktion bei 85 °C schließt sich die Entgasungsstufe an. Das fertige Alkoxylierungsprodukt wird auf unter 80 °C abgekühlt und aus dem Reaktor abgelassen.

Das erhaltene Alkoxylierungsprodukt enthält im Mittel pro Molekül 2 Trialkoxysilyleinheiten und hat eine mittlere Molmasse von 14500 g/mol. Freie Epoxidgruppen sind im Endprodukt nicht nachweisbar. Die Viskosität des Alkoxylierungsprodukt, bestimmt mit einem kalibrierten Rheometer, beträgt bei 25°C und einer Scherrate von 10 1/s ca. 16-25 Pa*s. Der mit Hilfe eines Sn-Katalysators (c: 0,3%) (Dioctyl-Zinn-Diketonat, TIB^{®} KAT 223 (TIB Chemicals) im Normklima (T: 23°C, RLF: 50%, 7 Tage) gehärtete Silyl-Polyether nach Beispiel 2 wurde angelehnt an DIN 53 504 mit einer Prüfgeschwindigkeit von 200 mm/Min. geprüft. Die ermittelte Bruchdehnung betrug 86% ± 3%.

Für die Lagertests wurde das alkoxysilylierte Alkoxylierungsprodukt mit einem Dibutyl-Sn-Diketonat (TIB^{®} KAT 226 (TIB Chemicals) oder mit einem Dioctyl-Sn-Diketonat-Katalysator (TIB^{®} KAT 223) vermischt (c(Katalysator): 0,5 Gew.-%). Wenn erforderlich wurde zusätzlich als Additiv für die chemische Trocknung Vinyl-Trimethoxy-Silan (zu beziehen z.B. als Dynasylan^{®} VTMO (Evonik Industries)) zugesetzt. Die Materialien wurden in einem Mischer (Speedmixer DAC 600 FVZ (Hausschild)) für 60s gemischt (2300 U/min), und im Anschluss in Euro-Kartuschen (Ritter) überführt und durch einen geeigneten Kolben verschlossen. Nach einem Tag Lagerung bei Raumtemperatur wurden die Kartuschen in einem Trockenschrank auf 60°C erwärmt und bei dieser Temperatur gelagert. Nach unterschiedlichen Zeiten wurde eine Kartusche geöffnet und auf Teilvernetzung des Inhalts kontrolliert. Dies geschieht durch Auspressen des Materials und die Beurteilung seiner Fließfähigkeit. Ist ein deutlicher Anstieg der Viskosität über 100 Pa*s und/oder ein Verlust der Fließfähigkeit zu beobachten, wird das Material als teilvernetzt beurteilt.

**Tabelle 1: Ergebnis der Lagertests des Alkoxylierungsprodukt gemischt mit Katalysator und ggf. Trocknungsmittel**

| Additiv | Lagerstabilität |
|---|---|
| Produkt gemäß Beispiel 1 - nicht erfindungsgemäß | |
| + Katalysator | 1-2 Tage |
| +VTMO +Katalysator | 3 Tage |
| Produkt gemäß Beispiel 2 - erfindungsgemäß | |
| + Katalysator | 10 Tage |
| +VTMO +Katalysator | 14 Tage |
| Produkt gemäß Beispiel 3 - erfindungsgemäß | |
| + Katalysator | 12 Tage |
| +VTMO +Katalysator | 18 Tage |

Bei Alkoxylierungsprodukte, die erfindungsgemäß terminal mit einer Oxybutylen versehen wurden, zeigt sich eine deutlich verbesserte Lagerstabilität in Anwesenheit von Katalysator. Diese Alkoxylierungsprodukte zeigen auch in Formulierung ein deutlich verbessertes Lagerverhalten, gekennzeichnet durch eine spätere Vergelung der Formulierung. Die Lagerzeit bis zur Vergelung der Formulierungen mit dem erfindungsgemäß hergestellten Alkoxylierungsprodukte erhöhte sich auf 7-10 Tage (siehe Tabelle 1). Wird das Alkoxylierungsprodukt wie im Beispiel 3 im letzten Reaktionsschritt bei 80°C bis 100°C hergestellt ist eine Lagerung mit Katalysator und bei 60°C auch für ca 12 Tage, mit zugesetztem Trocknungsmittel sogar für 18 Tage möglich. Dies stellt folglich eine deutliche Verbesserung gegenüber den ursprünglichen Alkoxylierungsprodukten des Standes der Technik dar und ermöglicht erst den Einsatz in den oben beispielhaft erwähnten Formulierungen und Anwendungen.

Überraschenderweise wurde beobachtet, dass sich das Dehnverhalten der durch Hydrolyse-Kondensation vernetzten Produkte durch die erfindungsgemäßen Strukturen deutlich verbessern lässt. So verbessert sich die Bruchdehnung der Polymere deutlich. Während bei dem in Beispiel 1 beschriebenen Produkte eine Bruchdehnung bei Streckung von 55% beobachtet wurde, konnte bei dem in Beispiel 2 hergestellten Produkte eine Bruchdehnung bei Streckung von 103% realisiert werden.

Als Beispiel für eine erfindungsgemäße Formulierung der erfindungsgemäßen Alkoxylierungsprodukte seien die folgenden Beispiele genannt, wobei die Anwendung dieser Erfindung ausdrücklich nicht auf diese Beispiele beschränkt ist.

**Tabelle 2: Härtbare Formulierung 1:**

| **Bestandteil** | **Masseanteil an gesamter Formulierung** |
|---|---|
| Alkoxylierungsprodukt gemäß Beispiel 2 | 29,2 Gew.-% |
| Diisoundecylenphthalat (Weichmacher) | 15,0 Gew.-% |
| Omyacarb^{®} 2 GU (Füllstoff) | 50,0 Gew.-% |
| Vinyltrimethoxysilan (Trocknungsmittel) | 0 Gew.-% bzw. 1,0 Gew.-% |
| Oligomeres Aminosilan [Dynasylan^{®} 1146] (Haftvermittler) | 1,5 Gew.-% |
| Pyrogene Kieselsäure [Aerosil^{®} R202] (Rheologieadditiv) | 3,0 Gew.-% |
| Dioctyl-Zinn-Diketonat [TIB^{®} KAT 223] (Katalysator) | 0,3 Gew.-% |

**Tabelle 3: Härtbare Formulierung 2:**

| **Bestandteil** | **Masseanteil an gesamter Formulierung** |
|---|---|
| Alkoxylierungsprodukt gemäß Beispiel 2 | 30,25 Gew.-% |
| Diisoundecylenphthalat (Weichmacher) | 7,5 Gew.-% |
| Socal^{®} U1S2 (Füllstoff) | 55,7 Gew.-% |
| Vinyltrimethoxysilan (Trocknungsmittel) | 0 Gew.-% bzw. 0,75 Gew.-% |
| Aminosilan [Dynasylan DAMO] (Haftvermittler) | 0,5 Gew.-% |
| Oligomeres Aminosilan [Dynasylan^{®} 1146] (Haftvermittler) | 1,5 Gew.-% |
| Irganox^{®} 1135 (Stabilisator) | 0,5 Gew.-% |
| Pyrogene Kieselsäure [Aerosil^{®} R202] (Rheologieadditiv) | 3,0 Gew.-% |
| Dioctyl-Zinn-Diketonat [TIB^{®} KAT 223] (Katalysator) | 0,3 Gew.-% |

**Tabelle 4: Härtbare Formulierung 3:**

| **Bestandteil** | **Masseanteil an gesamter Formulierung** |
|---|---|
| Alkoxylierungsprodukt gemäß Beispiel 2 | 22,2 Gew.-% |
| Alkansulfonsäurephenylester [Mesamoll^{®}, Bayer] (Weichmacher) | 21,0 Gew.-% |
| Sikron^{®} SF600 (Füllstoff) | 49,5 Gew.-% |
| Vinyltrimethoxysilan (Trocknungsmittel) | 0 Gew.-% bzw. 1,0 Gew.-% |
| Oligomeres Aminosilan [Dynasylan^{®} 1146] (Haftvermittler) | 1,5 Gew.-% |
| Amidwachs [Crayvallec^{®} SLX] (Rheologieadditiv) | 3,5 Gew.-% |
| Tinuvin^{®} 292 (Stabilisator) | 0,5 Gew.-% |
| Tinuvin^{®} 1130 (Stabilisator) | 0,5 Gew.-% |
| Dioctyl-Zinn-Diketonat [TIB^{®} KAT 223] (Katalysator) | 0,3 Gew.-% |

**Tabelle 5: Härtbare Formulierung 4:**

| **Bestandteil** | **Masseanteil an gesamter Formulierung** |
|---|---|
| Alkoxylierungsprodukt gemäß Beispiel 3 | 22,2 Gew.-% |
| Alkansulfonsäurephenylester [Mesamoll^{®}, Bayer] (Weichmacher) | 21,0 Gew.-% |
| Sikron^{®} SF600 (Füllstoff) | 49,5 Gew.-% |
| Vinyltrimethoxysilan (Trocknungsmittel) | 0 Gew.-% bzw. 1,0 Gew.-% |
| Oligomeres Aminosilan [Dynasylan^{®} 1146] (Haftvermittler) | 1,5 Gew.-% |
| Amidwachs [Crayvallec^{®} SLX] (Rheologieadditiv) | 3,5 Gew.-% |
| Tinuvin^{®} 292 (Stabilisator) | 0,5 Gew.-% |
| Tinuvin^{®} 1130 (Stabilisator) | 0,5 Gew.-% |
| Dioctyl-Zinn-Diketonat [TIB^{®} KAT 223] (Katalysator) | 0,3 Gew.-% |

Die Komponenten der genannten Formulierungen werden nach den dem Fachmann bekannten Methoden eingearbeitet, wobei besonderen Wert auf den Ausschluss von Feuchtigkeit und das Formulieren unter Vermeidung von Lufteinschlüssen gelegt werden muss. Dies geschieht üblicherweise durch das Formulieren unter Vakuum.

Vergleicht man nun die mit den Alkoxylierungsprodukten hergestellten Formulierungen wird überraschenderweise beobachtet, dass das in Beispiel 3, bei der verglichen mit Beispiel 2 niedrigeren GlyEO-Anlagerungstemperatur, hergestellte Alkoxylierungsprodukt eine verbesserte Härtung der Formulierung erlaubt. So ist bei der in Tabelle 5 dargestellten Formulierung nach etwa 20 Minuten eine Hautbildung zu beobachten, während unter gleichen Bedingungen die in Tabelle 4 dargestellte Formulierung etwa 35-40 Minuten zur Hautbildung benötigt. Die Bruchdehnung der ausgehärteten Formulierung aus Tabelle 4 wird hingegen nicht negativ beeinflusst.

## Patentansprüche

1. Alkoxylierungsprodukte der allgemeinen Formel (I) 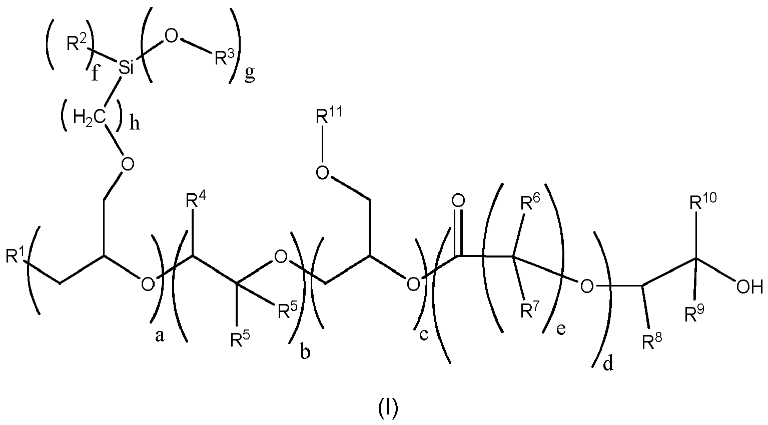 wobei
R¹ = einem 1- bis 6-fach funktionellen gesättigten oder ungesättigten, linearen oder verzweigten organischen Rest vom Typ einer Alkoxy-, Arylalkoxy- oder Alkylarylalkoxygruppe, bei der die Kohlenstoffkette durch Sauerstoffatome unterbrochen sein kann und auch seitenständige Alkoxysilylgruppen enthaltende Substituenten tragen kann oder direkt mit Alkoxysilylgruppen substituiert ist, ausgewählt aus der Gruppe der Polyoxyalkylenreste, Polyetherreste,einen Polyetheralkoxyrest oder einer einfach oder mehrfach annelierten phenolischen Gruppe entspricht,
oder von einer einfach oder mehrfach hydroxylierten oder mehrfach substituierten Verbindung ausgewählt aus der Gruppe der Alkohole, Polyetherole, Polyesterole, Siloxane, perfluorierten Polyetherole, (poly)-Urethane oder Zucker abgeleitet sein kann,
R² = eine Alkylgruppe mit 1 bis 8 Kohlenstoffatomen,
R³ = eine Alkylgruppe mit 1 bis 8 Kohlenstoffatomen,
R⁴ = ein Wasserstoffradikal oder eine Alkylgruppe mit 1 bis 8 Kohlenstoffatomen,
R⁵ = unabhängig voneinander ein Wasserstoffradikal, eine Alkylgruppe mit 1 bis 20 Kohlenstoffatomen, eine Aryl- oder Alkarylgruppe,
R¹¹ = eine gesättigte oder ungesättigte Alkylgruppe mit 1 bis 8 Kohlenstoffatomen ist, deren Kette durch Sauerstoff unterbrochen sein kann und weiter funktionelle Gruppen tragen kann, Carboxylgruppen oder Estergruppen, eine Arylgruppe mit 6 bis 20 Kohlenstoffatomen, eine Alkarylgruppe mit 7 bis 20 Kohlenstoffatomen, eine Allylgruppe oder ein Polyacrylsäureester
R⁶ und R⁷ = unabhängig voneinander gleich R⁵,
R⁸ und R⁹ = unabhängig voneinander gleich R⁴
R¹⁰ = R⁴ mit der Maßgabe,
dass gilt wenn R⁹ = H, dann gilt R¹⁰ gleich einer Alkylgruppe mit 2 bis 8 Kohlenstoffatomen und falls R⁹ = Methyl, dann gilt R¹⁰ ist eine Alkylgruppe mit 1 bis 8 Kohlenstoffatomen, jedenfalls ungleich Wasserstoff;
a = 0 bis 1000, mit der Maßgabe, dass a größer oder gleich 1 sein muss, wenn R¹ Substituenten keine Alkoxysilylgruppen trägt oder selbst nicht direkt mit Alkoxysilylgruppen substituiert ist,
b = 0 bis 1000,
c = unabhängig voneinander gleich b,
d = unabhängig voneinander gleich b,
mit der Maßgabe, dass die Gruppen mit den Indices a, b, c und d frei permutierbar über die Molekülkette sind,
e = 1 bis 10,
g + f = 3 und g mindestens gleich 1 ist,
h = 0, 1, 2, 3, 4, 5, 6, 7, 8, 9 oder 10 und mit der Maßgabe, dass die verschiedenen Monomereinheiten sowohl der Fragmente mit den Indices a, b, c, und d als auch der Polyoxyalkylenkette des Substituenten R¹ untereinander blockweise aufgebaut sein können oder aber einer statistischen Verteilung unterliegen und zudem untereinander frei permutierbar sind.

2. Alkoxylierungsprodukte der Formel (I) gemäß Anspruch 1 in denen R¹ ein von Polyolen, E O-Polyetherolen, PO-Polyetherolen oder EO/PO-Polyetherolen, Polyesterolen, Glycerin, Polyglycerin, PolyTHF, Phenol, Alkyl- und Arylphenolen, Bisphenol A, Novolaken, Hydroxycarbonsäuren, Siloxanolen, Siloxandiolen, Castor Öl, Rizinusöl, Ricinolsäure, Zucker, Lactonen, Cellulose, Methanol, Ethanol, n-, i-Propanol, n-, i-, oder t-Butanol, 2-Butanol, Octanol, Allylalkohol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, OH-funktionellen Polyolefinen, OH-funktionellem Polybutadien, 1,4-Butandiol, 1,6-Hexandiol, 1,4-Butindiol, Tetramethyldecindiol, Trimethylolpropan, Pentaerythrit, Sorbit, Cellulosezucker, Lignin oder auf Naturstoffen basierenden, Hydroxylgruppen tragende Verbindungen,
abgeleiteter Rest ist, der auch selbst Alkoxysilylgruppen tragen kann oder Substituenten trägt, die Alkoxysilylgruppen tragen.

3. Alkoxylierungsprodukte der Formel (I) gemäß Anspruch 1, **dadurch gekennzeichnet, dass** einen Endblock von alkoxyliertem Butylenoxid - (C₄H₉O)ₙH mit n = 1 bis 100 vorhanden ist.

4. Verfahren zur Herstellung von Alkoxylierungsprodukten gemäß Formel (I) unter DMC-Katalyse aus Hydroxylgruppen tragenden Startverbindungen R¹-H, bei dem in einer Alkoxylierungsreaktion zunächst wahlweise Alkylenoxide, epoxyfunktionelle Alkoxysilane, Glycidylverbindungen und/oder Lactone in beliebiger Abfolge angelagert werden **dadurch gekennzeichnet, dass** in einem letzten Alkoxylierungschritt mindestens eine Monomereinheit eines Epoxids der Formel (la) 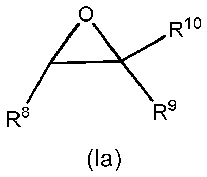 wobei
R⁸ und R⁹ = ein Wasserstoffradikal oder eine Alkylgruppe mit 1 bis 8 Kohlenstoffatomen, bevorzugt Methyl- oder Ethyl,
R¹⁰ = ein Wasserstoffradikal oder eine Alkylgruppe mit 1 bis 8 Kohlenstoffatomen, bevorzugt Methyl- oder Ethyl,
mit der Maßgabe,
dass gilt, wenn R⁹ = H, dann gilt R¹⁰ gleich einer Alkylgruppe mit 2 bis 8 Kohlenstoffatomen und falls R⁹ = Methyl, dann gilt R¹⁰ ist eine Alkylgruppe mit 1 bis 8 Kohlenstoffatomen, jedenfalls ungleich Wasserstoff,
an die OH-Funktion der Polymerkette addiert wird.

5. Verfahren nach Anspruch 4, **dadurch gekennzeichnet, dass** als Epoxid im letzten Alkoxylierungsschritt Butylenoxid oder Isobutylenoxid eingesetzt wird.

6. Härtbare Zusammensetzung enthaltend mindestens eine Verbindung der Formel (I) gemäß Anspruch 1 bis 3.

7. Härtbare Zusammensetzung gemäß Anspruch 6 enthaltend zumindest einen Härtungskatalysator.

8. Härtbare Zusammensetzung gemäß den Ansprüchen 6 oder 7 in Form einer Lösung, Emulsion, Dispersion oder Suspension **dadurch gekennzeichnet, dass** sie einen Emulgator enthalten.

9. Härtbare Zusammensetzung gemäß zumindest einem der Ansprüche 6 bis 8 enthaltend mindestens einen weiteren Zusatzstoff ausgewählt aus der Gruppe der Verdünner, Katalysatoren, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner Komplexbildner, Netzmittel, co-Vernetzer, Sprühhilfsmittel, Vitamine, Wuchsstoffe, Hormone, pharmakologische Wirkstoffe, Duftstoffe, Radikalfänger und/oder andere Zuschlagstoffe enthalten.

10. Härtbare Zusammensetzung gemäß einem der Ansprüche 6 bis 9 enthaltend weiterhin zumindest ein chemisches oder physikalisches Treibmittel.

11. Klebstoff- oder Dichtstoffmassen oder Beschichtungsmittel enthaltend eine härtbare Zusammensetzung gemäß zumindest einem der Ansprüche 6 bis 10.

12. Formkörper, Flüssigpasten, Pulverlackhärter, Partikel, Gewebe oder Verbundwerkstoff hergestellt unter Verwendung einer härtbaren Zusammensetzung gemäß den Ansprüchen 6 bis 10 oder der Kleb- und Dichtstoffe oder Beschichtungsstoffe gemäß Anspruch 11.

13. Formkörper gemäß Anspruch 12 in Form von flammhemmenden thermoplastischen Polymercompounds, flammhemmenden Trennwänden oder Kabelummantelungen.

14. Verwendung von härtbaren Zusammensetzungen gemäß zumindest einem der Ansprüche 6 bis 9 zur Abdichtung und/oder Verklebung und/oder Verschäumung und/oder zur Beschichtung von flächigen oder partikulären oder faserigen Substratoberflächen.

15. Verwendung gemäß Anspruch 14 zur Abdichtung und/oder Verklebung und/oder Verschäumung und/oder zur Beschichtung von porösen oder nicht-porösen, partikulären oder flächigen Substraten ausgewählt aus der Gruppe umfassend Konstruktionselemente, Bauteile, Metalle und Konstruktionswerkstoffe, Eisen, Stahl, Edelstahl und Gusseisen, keramische Materialien enthaltend feste Metall- oder Nichtmetalloxide oder Carbide, Aluminiumoxid, Magnesiumoxid oder Calciumoxid, sowie mineralische Substrate, organische Substrate, Verbundwerkstoffe, Holzverbundstoffe, Kork, Span- und Faserplatten aus Holz oder Kork, MDF-Platten, WPC-Artikel, Korkartikel, laminierte Artikel, Keramiken, Naturfasern, Kunstfasern und/oder Holz.

16. Verwendung von härtbaren Zusammensetzungen gemäß Anspruch 6 bis 10 in kosmetischen Produkten zur permanenten oder nicht-permanenten Behandlung von Haut, Haaren oder Hautanhangprodukten.

17. Verwendung der härtbaren Zusammensetzungen gemäß Anspruch 6 bis 10 in Lacken, Polymercompounds, Nanokomposite, Masterbatches oder Flüssigpasten, polymeren Schäumen, organischen Harzen oder Silikonharzen.
